# EUROPEAN PATENT APPLICATION

(11) **EP 4 765 378 A1**
(43) Date of publication of application: **24.06.2026**
(21) Application number: 24869735.1
(22) Date of filing: 14.05.2024
(51) Int. Cl.: H01M 50/143, H01M 50/148, H01M 50/317, H01M 50/342

(54) **BATTERY CELL CASING ASSEMBLY AND BATTERY CELL, BATTERY, AND ELECTRICAL APPARATUS**

(30) Priority: 26.09.2023 CN 202322632592 U
(71) Applicant: Contemporary Amperex Technology Co., Limited, Ningde, Fujian 352100 (CN)
(72) Inventor: WU, Kai, Ningde, Fujian 352100 (CN); LIN, Denghua, Ningde, Fujian 352100 (CN); CHEN, Wenwei, Ningde, Fujian 352100 (CN); CHEN, Xinxiang, Ningde, Fujian 352100 (CN); ZHENG, Yulian, Ningde, Fujian 352100 (CN); WANG, Peng, Ningde, Fujian 352100 (CN); JIN, Haizu, Ningde, Fujian 352100 (CN)
(74) Representative: Gong, Jinping
(86) International application number: PCT/CN2024/093209
(87) International publication number: WO 2025/066169

(57) **Abstract**

A battery cell casing assembly and a battery cell, a battery, and an electrical apparatus. The battery cell casing assembly comprises a casing, an explosion-proof valve, and pole terminals; the casing has an opening, and the casing comprises a mounting wall which has a mounting hole that penetrates the mounting wall; the explosion-proof valve is arranged at the mounting hole and is connected to the mounting wall; and the pole terminals are disposed on the mounting wall and are arranged at an interval with the mounting hole inbetween. In the battery cell casing assembly in the embodiments of the present application, the pole terminals are arranged on the mounting wall of the casing, the pole terminals thus increases the structural strength of the mounting wall, and the mounting wall is not prone to deformation, thereby enhancing the protection effect of the casing on an electrode assembly, and facilitating the control over the consistency of the blasting pressure of the explosion-proof valve.

## Description

### CROSS-REFERENCE TO RELATED APPLICATION

The present application is based on Chinese Patent Application No. 202322632592.6 filed on September 26, 2023, and claims the priority to this Chinese Patent Application, the content of which is incorporated herein by reference in its entirety.

### TECHNICAL FIELD

The present application relates to the technical field of batteries, and in particular, to a housing body assembly of a battery cell, a battery cell, a battery, and an electric device.

### BACKGROUND

Energy conservation and emission reduction are the key to sustainable development of the automobile industry. Electric vehicles have become an important part of the sustainable development of the automobile industry due to their energy-saving and environmental protection advantages. For electric vehicles, the battery technology is an important factor in their development. A housing cover of a battery cell in the related art is provided with a mounting hole for accommodating an explosion-proof valve, which will affect the structural strength of the housing cover and reduce the reliability of the battery cell.

### SUMMARY

In view of the above problems, the present application provides a housing body assembly of a battery cell, a battery cell, a battery, and an electric device. The housing body has higher structural strength and is not easily deformed.

In a first aspect, the present application provides a housing body assembly of a battery cell. The housing body assembly includes: a housing body, provided with an opening, where the housing body includes a mounting wall provided with a mounting hole in a penetrating manner; an explosion-proof valve, arranged at the mounting hole and connected to the mounting wall; and a post terminal, arranged on the mounting wall and spaced apart from the mounting hole.

In the technical solutions of embodiments of the present application, by arranging the post terminal on the mounting wall of the housing body, the structural strength of the mounting wall is enhanced by using the post terminal, such that the mounting wall is not easily deformed, thereby improving the protective effect of the housing body on an electrode assembly and facilitating the control over the consistency of the burst pressure of the explosion-proof valve.

In some embodiments, the mounting wall is provided with a through hole in a penetrating manner, and the post terminal is arranged at the through hole and connected to the mounting wall.

The through hole is configured to provide clearance for the connection between the post terminal and the electrode assembly, so as to enable the post terminal and the electrode assembly to be electrically connected at the through hole when the post terminal is arranged in the through hole, and enable the post terminal to output the electric energy inside the battery cell to an external circuit. The post terminal is connected to the mounting wall, such that the post terminal can strengthen a region on the mounting wall near the through hole, thereby enabling the enhancement of the overall structural strength of the mounting wall and making the mounting wall not easily deformed.

In some embodiments, the outer peripheral wall of the post terminal is provided with an annular groove extending in the circumferential direction thereof, and the annular groove is fitted with the hole edge of the through hole.

By using the fit between the annular groove and the hole edge of the through hole, the post terminal can be firmly fixed on the mounting wall, such that the post terminal is not easily detached from the mounting wall. In addition, by arranging the annular groove to be fitted with the hole edge of the through hole, the movement of the post terminal can be limited, which helps reduce the possibility of collision between the post terminal and the hole edge of the through hole, thereby enabling the post terminal to be more stably electrically connected to the battery cell, and enabling the post terminal to more stably output the electric energy inside the battery cell to an external circuit. By stably fixing the post terminal at the through hole of the mounting wall, even if the pressure inside the battery cell is high and one side of the post terminal is subjected to the pressure, the post terminal is not easily detached from the mounting wall, such that the post terminal can more stably enhance the structural strength of the mounting wall.

In some embodiments, the minimum distance between the hole edge of the through hole and the hole edge of the mounting hole is 1-30 mm.

By allowing the distance between the part of the hole edge of the through hole and the part of the hole edge of the mounting hole that are proximal to each other to be greater than or equal to 1 mm, the mounting hole and the through hole are not in communication with each other, and a solid region of at least 1 mm is formed between the mounting hole and the through hole to reserve a pressing region for punching processing, thereby facilitating the processing on the mounting wall to form the through hole and the mounting hole. By allowing the distance between the part of the hole edge of the through hole and the part of the hole edge of the mounting hole that are proximal to each other to be less than or equal to 30 mm, the mounting hole is not far away from the through hole. By reducing the distance between the mounting hole and the through hole, the post terminal can fully enhance the structural strength of the region on the mounting wall near the through hole after the post terminal is arranged at the through hole. In addition, since the through hole is not far away from the mounting hole, the post terminal can fully reduce the influence of the mounting hole on the structural strength of the mounting wall after the post terminal is arranged at the through hole, thereby fully enhancing the overall structural strength of the mounting wall.

In some embodiments, the mounting hole includes a first hole segment and a second hole segment arranged in a thickness direction of the mounting wall and being in communication with each other, and the second hole segment is proximal to an inner cavity of the housing body relative to the first hole segment, where a first step surface is formed between the first hole segment and the second hole segment, and the explosion-proof valve is arranged in the first hole segment and fitted with the first step surface.

The second hole segment can separate the first hole segment from the space inside the housing body. In this way, after the explosion-proof valve is arranged on the first step surface, the explosion-proof valve is spaced apart from a component inside the housing body by at least the first hole segment, such that when the air pressure inside the battery cell increases, gas can converge at the first hole segment, and the gas can directly apply pressure to the explosion-proof valve from the first hole segment. When the air pressure in the battery cell is higher than a critical value, the air pressure can damage the explosion-proof valve, thereby achieving pressure relief of the battery cell.

In some embodiments, the mounting hole further includes a third hole segment, the third hole segment is in communication with one end of the first hole segment distal to the second hole segment, a second step surface is formed between the first hole segment and the third hole segment, the explosion-proof valve is connected to the mounting wall by welding to form a weld seam, and the third hole segment is configured to accommodate the weld seam.

When the explosion-proof valve is connected to the mounting wall by welding, the formed weld seam protrudes from the explosion-proof valve. The third hole segment can reserve space for the weld seam, such that when a component is arranged on the mounting wall, the possibility of scratching between the component and the weld seam can be reduced, so as to protect the component and the weld seam and enable the weld seam to stably connect the explosion-proof valve and the mounting wall, thereby stably fixing the explosion-proof valve on the mounting wall.

In some embodiments, the housing body assembly of the battery cell further includes a protective sheet, where the protective sheet is arranged on a side of the explosion-proof valve facing away from the second hole segment and is configured to cover the explosion-proof valve.

The protective sheet covering the explosion-proof valve can separate the explosion-proof valve from the external environment to achieve a dustproof effect, and the area in which the explosion-proof valve is in contact with external air can be reduced, which helps reduce the oxidation speed of the explosion-proof valve.

In some embodiments, the mounting hole further includes a fourth hole segment, the fourth hole segment is in communication with one end of the third hole segment distal to the first hole segment, a third step surface is formed between the fourth hole segment and the third hole segment, and the protective sheet is arranged in the fourth hole segment and fitted with the third step surface.

The protective sheet is supported on the third step surface to arrange the protective sheet on a side of the explosion-proof valve facing away from the interior of the housing body, thereby enabling the protective sheet to isolate the explosion-proof valve from the external environment to achieve a dustproof effect. When the protective sheet is arranged in the fourth hole segment, the fourth hole segment can reserve space for arranging the protective sheet, such that the protective sheet can be arranged in the mounting hole, thereby reducing the protruding volume of the protective sheet from the mounting hole, and further helping reduce the possibility of scratching between an object in the external environment and the protective sheet, so as to provide the protection for the protective sheet.

In some embodiments, an exhaust groove is arranged on a side of the mounting wall facing away from the inner cavity of the housing body, the exhaust groove is in communication with the mounting hole, and the protective sheet covers a part of the exhaust groove.

After the protective sheet is arranged on the mounting wall, at least the third hole segment is provided between the protective sheet and the explosion-proof valve. That is, one side of the protective sheet is the third hole segment, and the other side is the external environment. Allowing the exhaust groove to be in communication with the third hole segment can balance the air pressure on both sides of the protective sheet, such that when the air pressure of the external environment is high or the air pressure in the third hole segment is high, the possibility of the protective sheet being damaged can be reduced, thereby enabling the protective sheet to fully protect the explosion-proof valve.

In some embodiments, the cross-section of the exhaust groove has a square, trapezoidal, or triangular shape.

In some embodiments, the explosion-proof valve is of an integrally formed part, and the explosion-proof valve is provided with a thickness reduced part; or the explosion-proof valve is of a split-type structure.

When the air pressure in the battery cell exceeds a critical value, the air pressure can first damage the thickness reduced part or the connection region of the split-type structure, and further damage the explosion-proof valve, such that the interior of the battery cell is in communication with the external environment, thereby achieving pressure relief of the battery cell.

In some embodiments, one post terminal is arranged on the mounting wall, and the post terminal and the explosion-proof valve are spaced apart from each other in a length direction of the mounting wall.

In some embodiments, at least two are arranged on the mounting wall, the at least two post terminals are spaced apart from each other in a length direction of the mounting wall, and the explosion-proof valve is located between the two post terminals.

By allowing the explosion-proof valve to be located between two post terminals, the two post terminals are located on both sides of the mounting hole after the post terminals are arranged at the through holes, so as to enhance the structural strength of the region on the mounting wall near the mounting hole from the both sides of the mounting hole, thereby helping fully reduce the influence of the mounting hole on the structural strength of the mounting wall, and fully enhancing the structural strength of the mounting wall.

In some embodiments, the mounting wall is located on a wall body of the housing body opposite the opening.

By allowing the mounting wall to be located on the wall body of the housing body opposite the opening, it is convenient for the post terminal on the mounting wall to be arranged directly opposite the electrode assembly when the electrode assembly is mounted inside the housing body, and further, when the electrode assembly is mounted to a designated position, the electrical connection between the post terminal and the electrode assembly is facilitated.

In a second aspect, the present application provides a battery cell. The battery cell includes: the housing body assembly of the battery cell according to the above embodiments; an electrode assembly, where the electrode assembly is arranged in the housing body and includes an active substance-coated part and a conductive part connected to the active substance-coated part, and the conductive part is electrically connected to the post terminal; and a housing cover, where the housing cover lids the opening to encapsulate the electrode assembly in the housing body.

In the technical solutions of embodiments of the present application, by arranging the post terminal on the mounting wall of the housing body, the structural strength of the mounting wall is enhanced by using the post terminal, such that the mounting wall is not easily deformed, thereby improving the protective effect of the housing body on an electrode assembly and facilitating the control over the consistency of the burst pressure of the explosion-proof valve.

In some embodiments, the mounting wall is located on the wall body of the housing body opposite the opening, an accommodating part is formed on the post terminal, and at least a part of the conductive part extends into the accommodating part.

In the technical solutions of the embodiments of the present application, by accommodating at least a part of the conductive part in the accommodating part, the space occupied by the battery cell itself can be reduced, such that a battery of the same volume can accommodate a greater number of battery cells, thereby further improving the volumetric energy density of the battery. Furthermore, by accommodating at least a part of the conductive part in the accommodating part to occupy a space in the post terminal, the redundancy of the conductive part in the housing can be reduced to at least a certain extent, the probability of short circuit between the conductive part and the active substance-coated part can be reduced, and the probability of short circuit of the battery cell can be reduced, thereby improving the working reliability and stability of the battery cell and the battery.

In some embodiments, the accommodating part includes a first accommodating groove, a surface of the post terminal on a side facing the active substance-coated part is a post terminal inner end surface, an opening of the first accommodating groove is formed on the post terminal inner end surface, and at least a part of the conductive part is accommodated in the first accommodating groove.

In the above technical solution, in one aspect, the formation of the first accommodating groove on the post terminal can reduce the weight of the post terminal to a certain extent, so as to improve the gravimetric energy density of the battery cell and the battery. In another aspect, since the opening of the first accommodating groove is formed on the post terminal inner end surface and the post terminal inner end surface is the surface of the post terminal on a side proximal to the active substance-coated part, the first accommodating groove may be open toward the active substance-coated part, which facilitates the extension of the conductive part into the first accommodating groove, thereby improving the assembly efficiency. Moreover, the first accommodating groove in this configuration is easy to process and thus improves the production efficiency.

In some embodiments, the accommodating part includes a second accommodating groove, a surface of the post terminal on a side distal to the active substance-coated part is a post terminal outer end surface, an opening of the second accommodating groove is formed on the post terminal outer end surface, the second accommodating groove is in communication with an inner cavity of the housing body through a perforation, the conductive part is provided in the perforation in a penetrating manner, and at least a part of the conductive part is accommodated in the second accommodating groove.

In the above technical solution, in one aspect, the arrangement of the second accommodating groove on the post terminal can reduce the weight of the post terminal to a certain extent, so as to improve the gravimetric energy density of the battery cell and the battery. In another aspect, since the opening of the second accommodating groove is formed on the post terminal outer end surface and the post terminal outer end surface is the surface of the post terminal on the side distal to the active substance-coated part, the second accommodating groove may be open in a direction facing away from the active substance-coated part. In this way, when at least a part of the conductive part is accommodated in the second accommodating groove, the accommodation and arrangement of the conductive part can be easily achieved through the opening of the second accommodating groove, and the electrical connection operation between the conductive part and the post terminal can be easily achieved through the opening of the second accommodating groove, thereby helping reduce the difficulty in producing the battery cell, and improving the production efficiency of the battery cell.

In a third aspect, the present application provides a battery. The battery includes the battery cell according to the above embodiments. By arranging the post terminal on the mounting wall of the housing body, the structural strength of the mounting wall is enhanced by using the post terminal, such that the mounting wall is not easily deformed, thereby improving the protective effect of the housing body on the electrode assembly and facilitating the control over the consistency of the burst pressure of the explosion-proof valve.

In a fourth aspect, the present application provides an electric device. The electric device includes the battery according to the above embodiments. By arranging the post terminal on the mounting wall of the housing body, the structural strength of the mounting wall is enhanced by using the post terminal, such that the mounting wall is not easily deformed, thereby improving the protective effect of the housing body on the electrode assembly and facilitating the control over the consistency of the burst pressure of the explosion-proof valve.

The above description is only an overview of the technical solutions of the present application. To more clearly understand the technical means of the present application to enable implementation in accordance with the content of the specification and to make the above and other purposes, features, and advantages of the present application more obvious and easy to understand, the detailed description of the present application is provided below.

### BRIEF DESCRIPTION OF THE DRAWINGS

By reading the detailed description of the preferred embodiments below, various additional advantages and benefits will become clear to those of ordinary skill in the art. The drawings are provided solely for the purpose of illustrating the preferred embodiments and shall not be construed as limiting the scope of the present application. Furthermore, the same reference numerals in all the drawings denote identical components. In the drawings:
FIG. 1 is a schematic structural view of a vehicle according to some embodiments of the present application;
FIG. 2 is an exploded view of a battery according to some embodiments of the present application;
FIG. 3 is a schematic structural view of a battery cell according to some embodiments of the present application;
FIG. 4 is a structural cross-sectional view of a battery cell according to some embodiments of the present application;
FIG. 5 is an exploded view of a battery cell according to some embodiments of the present application;
FIG. 6 is a top view of a housing body assembly according to some embodiments of the present application;
FIG. 7 is a cross-sectional view of a battery cell according to some embodiments of the present application;
FIG. 8 is an enlarged view of part A in FIG. 7;
FIG. 9 is an enlarged view of a partial region in FIG. 7;
FIG. 10 is an enlarged view of a partial region of a cross-sectional view of a battery cell according to some embodiments of the present application, in which case a mounting hole includes a first hole segment and a second hole segment;
FIG. 11 is an enlarged view of a partial region of a cross-sectional view of a battery cell according to some embodiments of the present application, in which case a mounting hole includes a first hole segment, a second hole segment, and a third hole segment;
FIG. 12 is an enlarged view of a partial region of a cross-sectional view of a battery cell according to some embodiments of the present application, in which case a mounting hole includes a first hole segment, a second hole segment, a third hole segment, and a fourth hole segment;
FIG. 13 is an enlarged view of a partial region of a cross-sectional view of a battery cell according to some embodiments of the present application;
FIG. 14 is an enlarged view of part B in FIG. 6;
FIG. 15 is a cross-sectional view of a battery cell according to some embodiments of the present application;
FIG. 16 is an enlarged view of part C in FIG. 15;
FIG. 17 is a partial cross-sectional schematic view of a battery cell according to some embodiments of the present application;
FIG. 18 is a partial cross-sectional schematic view of a battery cell according to some embodiments of the present application;
FIG. 19 is a partial cross-sectional schematic view of a battery cell according to some embodiments of the present application;
FIG. 20 is a partial cross-sectional schematic view of a battery cell according to some embodiments of the present application;
FIG. 21 is a partial cross-sectional schematic view of a battery cell according to some embodiments of the present application;
FIG. 22 is a partial cross-sectional schematic view of a battery cell according to some embodiments of the present application.

Reference numerals:
vehicle 1000;
battery 100, controller 200, motor 300;
battery cell 10, housing body assembly 101;
housing 11, housing body 111, opening 1110, housing cover 112, through hole 113, mounting wall 114, mounting hole 115, first hole segment 1151, second hole segment 1152, third hole segment 1153, fourth hole segment 1154, first step surface 1161, second step surface 1162, third step surface 1163, exhaust groove 117;
post terminal 12, positive electrode post terminal 1201, negative electrode post terminal 1202, accommodating part 121, first accommodating groove 12110, first end wall 12111, first recess 12112, first side wall 12113, second accommodating groove 12120, second end wall 12121, second recess 12122, second side wall 12123, perforation 12130, post terminal inner end surface 122, post terminal outer end surface 123, first groove 126, spacer part 127, annular groove 128;
cover plate 13, first conductive member 131, second groove 1311, second conductive member 132;
protective sheet 14;
case 20, first part 201, second part 202;
electrode assembly 2, active substance-coated part 21, conductive part 22; and
support 3, penetrating hole 314, insulating member 4, explosion-proof valve 6, thickness reduced part 61, and groove cover 7.

### DETAILED DESCRIPTION

Embodiments of the technical solutions of the present application will be described in detail below with reference to the drawings. The following embodiments are only used to more clearly illustrate the technical solutions of the present application, and therefore, are only exemplary and do not limit the claimed scope of the present application.

Unless otherwise defined, all technical and scientific terms used herein have the same meaning as commonly understood by those skilled in the technical field to which the present application belongs. The terms used herein are only used to illustrate the specific embodiments, rather than limit the present application. The terms "include", "comprise", and "provided with", and any variations thereof in the description and claims of the present application and the above drawing description encompass non-exclusive inclusions.

In the description of the embodiments of the present application, technical terms such as "first", "second", and the like are only used to distinguish different objects and should not be interpreted as indicating or implying the relative importance or implicitly indicating the number, specific order, or primary and secondary relationship of the noted technical features. In the description of the embodiments of the present application, unless otherwise specifically defined, "plurality of" means two or more.

Reference in the present application to "embodiment" means that a particular feature, structure, or characteristic described in combination with the embodiment can be included in at least one embodiment of the present application. The references of the word in the context of the specification do not necessarily refer to the same embodiment, nor to separate or alternative embodiments exclusive of other embodiments. It will be explicitly and implicitly appreciated by those skilled in the art that the embodiments described herein can be combined with other embodiments.

In the description of the embodiments of the present application, the term "and/or" is merely a way to describe the associative relationship between associated objects, indicating that there are three possible relationships. For example, "A and/or B" may denote: the presence of A alone, the simultaneous presence of A and B, and the presence of B alone. In addition, the character "/" herein generally indicates an "or" relationship between the associated objects before and after the "/".

In the description of the embodiments of the present application, the term "plurality of" refers to two or more (including two). Similarly, "plurality of groups" refers to two or more (including two) groups, and "plurality of pieces" refers to two or more (including two) pieces.

In the description of the embodiments of the present application, the technical terms "center", "longitudinal", "transverse", "length", "width", "thickness", "upper", "lower", "front", "rear", "left", "right", "vertical", "horizontal", "top", "bottom", "inner", "outer", "clockwise" "counterclockwise", "axial", "radial", "circumferential" and the like indicate orientations or positional relationships based on those shown in the drawings. They are merely for the convenience of describing the present application and simplifying the description, rather than indicating or implying that the apparatus or element referred to must have a specific orientation or be constructed and operated in the specific orientation, and thus should not be construed as a limitation to the present application.

In the description of the embodiments of the present application, unless otherwise clearly specified and defined, the technical terms "mount", "interconnect", "connect", "fix", and the like should be interpreted in their broad senses. For example, they may be a fixed connection, a detachable connection, or an integral connection; a mechanical connection or an electrical connection; or a direct connection, an indirect connection via an intermediate, a communication between interiors of two elements, or an interaction between two elements. For those of ordinary skill in the art, the specific meanings of the above terms in the embodiments of the present application can be interpreted according to specific conditions.

At present, judging from the trends in the market, the application of power batteries is becoming increasingly widespread. Power batteries are not only applied in energy storage power systems such as hydropower, thermal power, wind power, and solar power stations, but are also widely applied in electric transportation vehicles such as electric bicycles, electric motorcycles, or electric cars, as well as in military equipment, aerospace, and other fields. With the continuous expansion of the application field of power batteries, the market demand for power batteries is also constantly increasing.

A battery cell is generally provided with an explosion-proof valve. The explosion-proof valve is configured to relieve the internal pressure of the battery cell when the internal pressure or temperature of the battery cell reaches a threshold.

A housing of a battery cell in the related art includes a housing cover and a housing body. The housing body is provided with a chamber for accommodating an electrode assembly and an opening. The housing cover is used for closing the opening. A mounting hole is formed on the housing cover, and an explosion-proof valve is arranged at the mounting hole. The explosion-proof valve can be burst when the internal pressure or temperature of the battery cell reaches a threshold, which makes the interior and the exterior of the battery cell be in communication with each other, thereby achieving the purpose of pressure relief of the battery cell.

However, since the structural size of the housing cover is small, the arrangement of the mounting hole on the housing cover can reduce the structural strength of the housing cover, such that the protective effect of the housing cover on the interior of the battery cell is easily affected. Moreover, when the pressure inside the battery cell is high, the housing cover is more easily deformed, resulting in reduced reliability of the battery cell.

To improve the reliability of the battery cell, the mounting hole is formed on the housing body in the present application. Since the volume of the housing body is greater than that of the housing cover, compared to the related art, the arrangement of the mounting hole on the housing body in the present application enables a smaller proportion of the space occupied by the mounting hole on the housing body, resulting in a smaller influence of the mounting hole on the structural strength of the housing body.

In addition, in the present application, the post terminal and the mounting hole are provided on the same wall body of the housing body, such that the post terminal is arranged proximal to the mounting hole. In this way, the structural strength of the housing can be enhanced by using the post terminal. When the pressure inside the battery cell is high, the housing body is not easily deformed, and the pressure can be concentrated at the explosion-proof valve, such that the pressure relief of the battery cell can be achieved by using the explosion-proof valve.

The battery disclosed in the embodiments of the present application is used as a power supply for an electric device or various energy storage systems using a battery as an energy storage element. The electric device may be, but is not limited to, a mobile phone, a tablet, a laptop computer, an electric toy, an electric tool, an electric bike, an electric car, a ship, a spacecraft, and the like. The electrical toys may include stationary or mobile electrical toys, such as game consoles, electrical car toys, electric ship toys, or electrical airplane toys. The spacecraft may include airplanes, rockets, space shuttles, spaceships, or the like.

For ease of description, the present application is illustrated by taking a vehicle 1000 as an example of the electric device according to an embodiment of the present application.

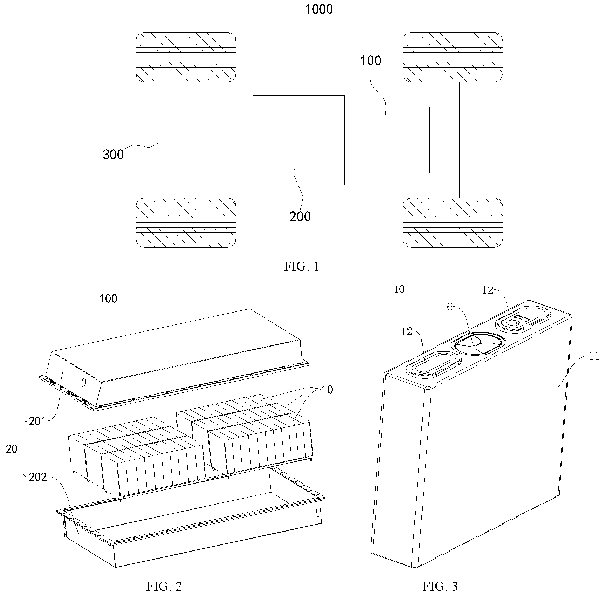

As shown in FIG. 1, FIG. 1 is a structural schematic view of a vehicle 1000 according to some embodiments of the present application. The vehicle 1000 may be a fuel vehicle, a gas vehicle, or a new energy vehicle. The new energy vehicle may be a pure electric vehicle, a hybrid vehicle, an extended-range vehicle, or the like. A battery 100 is provided inside the vehicle 1000, and the battery 100 may be provided at the bottom, head, or tail of the vehicle 1000. The battery 100 may be configured to power the vehicle 1000. For example, the battery 100 may serve as an operation power source for the vehicle 1000. The vehicle 1000 may further include a controller 200 and a motor 300. The controller 200 is configured to control the battery 100 to power the motor 300, e.g., for operation power needed by the vehicle 1000 for start-up, navigation, and driving.

In some embodiments of the present application, the battery 100 may not only serve as an operation power source for the vehicle 1000, but also as a driving power source for the vehicle 1000 to, instead of or in part instead of fuel or natural gas, provide driving power for the vehicle 1000.

Referring to FIG. 2, FIG. 2 is an exploded view of a battery 100 according to some embodiments of the present application. The battery 100 includes a case 20 and battery cells 10. The battery cells 10 are accommodated in the case 20. The case 20 is configured to provide an accommodating space for the battery cell 10, and the case 20 may be of a variety of structures. In some embodiments, the case 20 may include a first part 201 and a second part 202. The first part 201 and the second part 202 are mutually lidded onto each other, and the first part 201 and the second part 202 jointly define an accommodating space for accommodating the battery cells 10. The second part 202 may be of a hollow structure with one end open, and the first part 201 may be of a plate-like structure. The first part 201 is lidded onto the open side of the second part 202, such that the first part 201 and the second part 202 jointly define the accommodating space. The first part 201 and the second part 202 may also each be of a hollow structure with one side open, and the open side of the first part 201 is lidded onto the open side of the second part 202. Certainly, the case 20 formed by the first part 201 and the second part 202 may be in various shapes, such as a cylindrical shape and a rectangular parallelepiped shape.

In the battery 100, there may be a plurality of battery cells 10, and the plurality of battery cells 10 may be connected in series, in parallel, or in series-parallel. The series-parallel connection means that both series connection and parallel connection are present for the connection among the plurality of battery cells 10. The plurality of battery cells 10 may be directly connected in series, in parallel, or in series-parallel, and then the whole formed by the plurality of battery cells 10 is accommodated in the case 20. Certainly, the situation may be that in the battery 100, the plurality of battery cells 10 are first connected in series, in parallel, or in series-parallel to form battery modules, and then the plurality of battery modules are connected in series, in parallel, or in series-parallel to form a whole and accommodated in the case 20. The battery 100 may further include other structures. For example, the battery 100 may further include a busbar component for achieving electrical connection among the plurality of battery cells 10.

Each battery cell 10 may be a secondary battery or a primary battery; it may also be a lithium-sulfur battery, a sodium-ion battery, or a magnesium-ion battery, but is not limited thereto. The battery cell 10 may be cylindrical, flat, rectangular parallelepiped-shaped, or in other shapes.

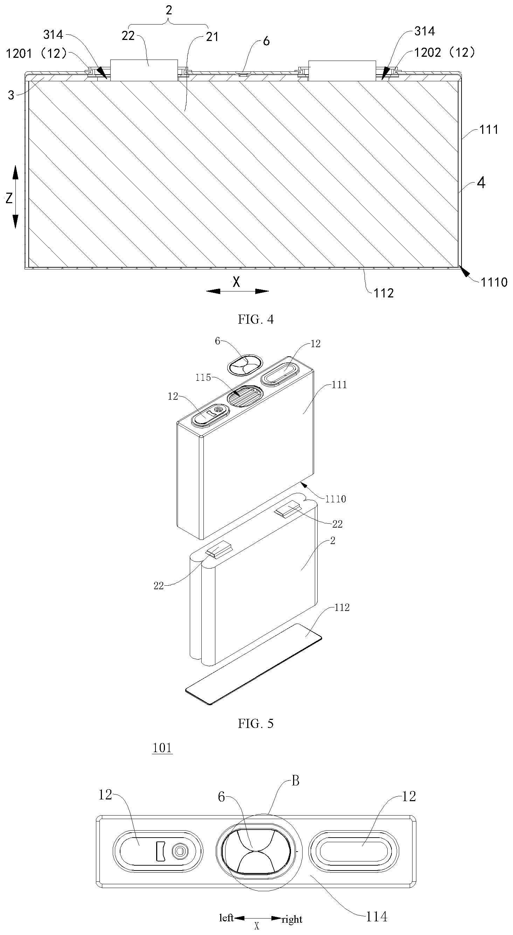

Referring to FIG. 3 and FIG. 4, FIG. 3 is a schematic structural view of a battery cell 10 according to some embodiments of the present application, and FIG. 4 is a structural cross-sectional view of a battery cell 10 according to some embodiments of the present application. The battery cell 10 includes a housing 11 and an electrode assembly 2. The housing 11 may include a housing body 111 and a housing cover 112.

The housing cover 112 refers to a component that lids the opening of the housing body 111 to isolate the internal environment of the battery cell 10 from the external environment. Without limitation, the shape of the housing cover 112 may be adapted to the shape of the housing body 111 to match the housing body 111. Optionally, the housing cover 112 may be made of a material with a certain hardness and strength (for example, aluminum alloy), such that the housing cover 112 is not easily deformed when being squeezed or collided. This provides the battery cell 10 with higher structural strength and improved reliability.

The housing cover 112 may also be made of a variety of materials, such as copper, iron, aluminum, stainless steel, an aluminum alloy, plastic, etc., which is not specified in the embodiments of the present application. In some embodiments, an insulating member may be arranged on the inner side of the housing cover 112. The insulating member may be configured to isolate an electrical connection component in the housing body 111 from the housing cover 112 to reduce the risk of short circuits. Illustratively, the insulating member may be made of plastic, rubber, or the like.

The housing body 111 is a component configured to form the internal environment of the battery cell 10 in combination with the housing cover 112. The formed internal environment may be used to accommodate the electrode assembly 2, electrolyte, and other components. Functional components such as the post terminal 12 are arranged on the housing body 111. The post terminal 12 may be configured to be electrically connected to the electrode assembly 2 to output or input the electric energy of the battery cell 10. The housing body 111 is provided with an explosion-proof valve 6. The explosion-proof valve 6 is configured to relieve the internal pressure when the internal pressure or temperature of the battery cell 10 reaches a threshold.

The housing body 111 and the housing cover 112 may be independent components. An opening 1110 may be formed on the housing body 111, and the housing cover 112 is lidded onto the opening 1110 to form the internal environment of the battery cell 10. Without limitation, the housing cover 112 and the housing body 111 may be integrated. Specifically, the housing cover 112 and the housing body 111 may form a common connection surface before other components are placed in the housing body, and when the interior of the housing body 111 needs to be encapsulated, the housing cover 112 is lidded onto the housing body 111.

The housing body 111 may be in various shapes and sizes, such as a rectangular parallelepiped, a cylinder, and a hexagonal prism. Specifically, the shape of the housing body 111 may be determined according to the specific shape and size of the electrode assembly 2. The housing body 111 may be made of a variety of materials, such as copper, iron, aluminum, stainless steel, an aluminum alloy, plastic, etc., which is not specified in the embodiments of the present application.

The electrode assembly 2 is a component where the electrochemical reaction occurs in the battery cell 100. One or more electrode assemblies 2 may be accommodated in the housing body 111. The electrode assembly 2 is mainly formed by winding or stacking a positive electrode plate and a negative electrode plate, and a separator is generally disposed between the positive electrode plate and the negative electrode plate. The parts of the positive electrode plate and the negative electrode plate that contain active substances constitute the active substance-coated part 21. The active substance-coated part 21 includes a positive electrode active substance-coated part and a negative electrode active substance-coated part. The parts of the positive electrode plate and the negative electrode plate that do not contain active substances each constitute a conductive part 22, for example, a tab. The tab includes a positive electrode tab and a negative electrode tab. The positive electrode tab and the negative electrode tab may be together located at one end of the active substance-coated part 21, or respectively at both ends of the active substance-coated part 21. During the charging and discharging process of the battery 100, the active substance-coated part 21 reacts with the electrolyte, and the conductive part 22 is connected to the post terminal 12 to form a current circuit.

As shown in FIG. 3 and FIG. 4, the battery cell 10 further includes a support 3, an insulating member 4, and an explosion-proof valve 6. The support 3 is arranged at one end of the active substance-coated part 21. A penetrating hole 314 is formed on the support 3. The tab 22 may pass through the penetrating hole 314 to be connected to the post terminal 12. The insulating member 4 is connected to the support 3 and jointly wrapped around the circumference of the electrode assembly 2. The insulating member 4 may be configured to isolate an electrical connection component in the housing 11 from the housing 11 to reduce the risk of short circuits. Illustratively, the insulating member 4 may be made of plastic, rubber, or the like. The insulating member 4 and the support 3 may be in a bonding connection or a hot-melting connection. Certainly, the insulating member 4 and the support 3 may also be in other connection manners. The explosion-proof valve 6 is arranged on the housing 11. The explosion-proof valve 6 is configured to relieve the internal pressure when the internal pressure or temperature of the battery cell 10 reaches a threshold. The explosion-proof valve 6 may be arranged on the housing cover 112, or may also be arranged on the housing body 111.

Referring to FIG. 5 and FIG. 6, FIG. 5 is an exploded view of a battery cell 10 according to some embodiments of the present application, and FIG. 6 is a top view of a housing body assembly 101 according to some embodiments of the present application. The present application provides a housing body assembly 101 of a battery cell 10. The housing body assembly 101 of the battery cell 10 includes a housing body 111. The housing body 111 is provided with an opening 1110. The housing body 111 includes a mounting wall 114. The mounting wall 114 refers to a wall body of the housing body 111. The mounting wall 114 is provided with a mounting hole 115 in a penetrating manner to allow the mounting hole 115 to be in communication with the interior of the housing body 111.

The housing body assembly 101 of the battery cell 10 further includes an explosion-proof valve 6 and a post terminal 12. The explosion-proof valve 6 is arranged at the mounting hole 115 and connected to the mounting wall 114, and the post terminal 12 is arranged on the mounting wall 114 and spaced apart from the mounting hole 115.

The explosion-proof valve 6 may be fixedly or detachably connected to the mounting wall 114. The explosion-proof valve 6 is arranged at the mounting hole 115 and covers the mounting hole 115, so as to close the mounting hole 115 and isolate the internal environment of the housing body 111 from the external environment. One side of the explosion-proof valve 6 faces the inside of the housing body 111, and the side of the explosion-proof valve 6 will be subjected to the pressure inside the battery cell 10. When the pressure inside the battery cell 10 is higher than a critical value, the explosion-proof valve 6 can be burst due to the pressure inside the battery cell 10. In this case, the interior of the housing body 111 is in communication with the external environment, so as to achieve pressure relief of the battery cell 10. The arrangement of the explosion-proof valve 6 can improve the use safety of the battery cell 10 and reduce the possibility of explosion of the battery cell 10.

The post terminal 12 is configured to be electrically connected to the electrode assembly 2 inside the housing body 111. The post terminal 12 may be made of metals such as copper and aluminum, or a metal composite. The post terminal 12 is configured to output the electric energy inside the battery to an external circuit. There are many types of the post terminal 12, commonly including a cylindrical shape, a square shape, a flat shape, or the like, which is not limited herein. The post terminal 12 on the mounting wall 114 may be a positive electrode post terminal 1201 or a negative electrode post terminal 1202, which is not limited herein.

Since the mounting hole 115 is formed on the mounting wall 114, the arrangement of the mounting hole 115 will reduce the structural strength of the mounting wall 114. By arranging the post terminal 12 on the mounting wall 114 and spacing apart the post terminal 12 from the mounting hole 115, the structural strength of the mounting wall 114 is enhanced by using the post terminal 12, thereby enhancing the structural strength of the housing body 111. This facilitates the improvement of the protective effect of the housing body 111 on the electrode assembly 2 and makes the mounting wall 114 not easily deformed. In this way, even if the pressure inside the battery cell 10 is high, the mounting wall 114 is not easily deformed, which helps maintain the stability of the pressure at the explosion-proof valve 6 and facilitates the control over the consistency of the burst pressure of the explosion-proof valve 6.

Specifically, if the mounting wall 114 deforms, the size of the space inside the housing body 111 changes, and in this case, the pressure at the explosion-proof valve 6 changes. When the housing body 111 deforms to different degrees, the pressure when the pressure inside the battery cell 10 bursts the explosion-proof valve 6 is different. By arranging the post terminal 12 on the mounting wall 114, the structural strength of the mounting wall 114 is enhanced by using the post terminal 12, such that the mounting wall 114 is not easily deformed, and the size of the space inside the housing body 111 is not easily changed, which helps improve the stability of the pressure at the explosion-proof valve 6 and facilitates the control over the consistency of the burst pressure of the explosion-proof valve 6.

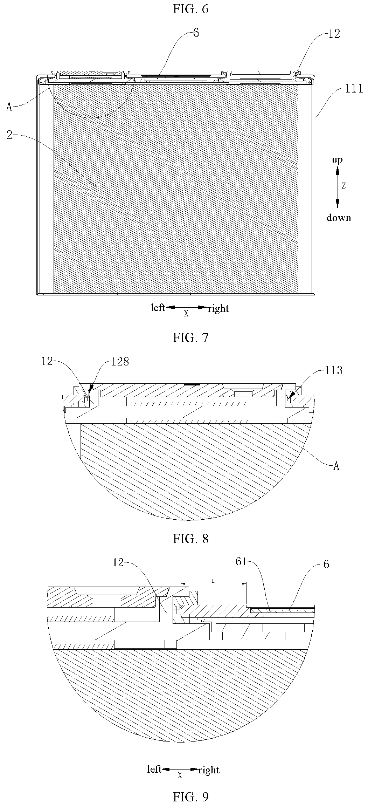

Referring to FIG. 6, and further referring to FIG. 7 and FIG. 8, FIG. 7 is a cross-sectional view of a battery cell 10 according to some embodiments of the present application, and FIG. 8 is an enlarged view of part A in FIG. 7. The mounting wall 114 is provided with a through hole 113 in a penetrating manner. The post terminal 12 is arranged at the through hole 113, and the post terminal 12 is connected to the mounting wall 114.

The mounting wall 114 being provided with a through hole 113 in a penetrating manner means that the through hole 113 penetrates the mounting wall 114 in a thickness direction of the mounting wall, and the through hole 113 is in communication with the interior of the housing body 111. In this way, when the post terminal 12 is arranged at the through hole 113, the electrical connection between the post terminal 12 and the electrode assembly 2 inside the housing body 111 is facilitated. The post terminal 12 may be fixedly or detachably connected to the mounting wall 114.

The through hole 113 is configured to provide clearance for the connection between the post terminal 12 and the electrode assembly 2, so as to enable the post terminal 12 and the electrode assembly 2 to be electrically connected at the through hole 113 when the post terminal 12 is arranged in the through hole 113, and enable the post terminal 12 to output the electric energy inside the battery cell 10 to an external circuit. The post terminal 12 is connected to the mounting wall 114, such that the post terminal 12 can strengthen a region on the mounting wall 114 near the through hole 113, thereby enabling the enhancement of the overall structural strength of the mounting wall 114 and making the mounting wall 114 not easily deformed.

Further referring to FIG. 8, the outer peripheral wall of the post terminal 12 is provided with an annular groove 128 extending in the circumferential direction thereof, and the annular groove 128 is fitted with the hole edge of the through hole 113.

The post terminal 12 may have a circular cylinder shape, and the annular groove 128 is located on a side surface of the post terminal 12 and extends around the circumferential direction of the post terminal 12. In the axial direction of the post terminal 12, the projection of the annular groove 128 is formed in a circular shape, and correspondingly, the through hole 113 is a circular through hole 113. The post terminal 12 may also have an elliptical cylinder shape, and the annular groove 128 is located on a side surface of the post terminal 12 and extends around the circumferential direction of the post terminal 12. In the axial direction of the post terminal 12, the projection of the annular groove 128 is formed in an elliptical shape, and correspondingly, the through hole 113 is an elliptical through hole 113. Certainly, the post terminal 12 may have a conical shape, a circular truncated-cone shape, a cubic shape, or the like, which is not limited herein.

By using the fit between the annular groove 128 and the hole edge of the through hole 113, the post terminal 12 can be firmly fixed on the mounting wall 114, such that the post terminal 12 is not easily detached from the mounting wall 114. In addition, by arranging the annular groove 128 to be fitted with the hole edge of the through hole 113, the movement of the post terminal 12 can be limited, which helps reduce the possibility of collision between the post terminal 12 and the hole edge of the through hole 113, thereby enabling the post terminal 12 to be more stably electrically connected to the battery cell 10, and enabling the post terminal 12 to more stably output the electric energy inside the battery cell 10 to an external circuit. By stably fixing the post terminal 12 at the through hole 113 on the mounting wall 114, even if the pressure inside the battery cell 10 is high and one side of the post terminal 12 is subjected to the pressure, the post terminal 12 is not easily detached from the mounting wall 114, such that the post terminal 12 can more stably enhance the structural strength of the mounting wall 114.

Referring to FIG. 9, FIG. 9 is an enlarged view of a partial region in FIG. 7. The minimum distance L between the hole edge of the through hole 113 and the hole edge of the mounting hole 115 is 1-30 mm.

The through hole 113 extends in the X direction. The mounting hole 115 extends in the X direction. The distance between one end of the through hole 113 proximal to the mounting hole 115 in the X direction and one end of the mounting hole 115 proximal to the through hole 113 in the X direction is the minimum distance L, and the value of L is 1-30 mm. As shown in FIG. 8, the X direction is a left-right direction, and both the through hole 113 and the mounting hole 115 extend in the left-right direction. If the mounting hole 115 is located on the right side of the through hole 113, the distance between the right end of the through hole 113 and the left end of the mounting hole 115 is the minimum distance L, and the value of L is 1-30 mm. If the mounting hole 115 is located on the left side of the through hole 113, the distance between the left end of the through hole 113 and the right end of the mounting hole 115 is the minimum distance L, and the value of L is 1-30 mm.

The through hole 113 and the mounting hole 115 may be formed by punching. Certainly, the through hole 113 and the mounting hole 115 may also be formed by using other processes, which are not limited herein.

In the above technical solutions, by limiting the distance between the part of the hole edge of the through hole 113 and the part of the hole edge of the mounting hole 115 that are proximal to each other to be greater than or equal to 1 mm, the mounting hole 115 and the through hole 113 are not in communication with each other, and a solid region of at least 1 mm is formed between the mounting hole 115 and the through hole 113 to reserve a pressing region for punching processing, thereby facilitating the processing on the mounting wall 114 to form the through hole 113 and the mounting hole 115.

By limiting the distance between the part of the hole edge of the through hole 113 and the part of the hole edge of the mounting hole 115 that are proximal to each other to be less than or equal to 30 mm, the mounting hole 115 is not far away from the through hole 113. By reducing the distance between the mounting hole 115 and the through hole 113, the post terminal 12 can fully enhance the structural strength of the region on the mounting wall 114 near the through hole 113 after the post terminal 12 is arranged at the through hole 113. In addition, since the through hole 113 is not far away from the mounting hole 115, the post terminal 12 can fully reduce the influence of the mounting hole 115 on the structural strength of the mounting wall 114 after the post terminal 12 is arranged at the through hole 113, thereby fully enhancing the overall structural strength of the mounting wall 114.

The distance between the part of the hole edge of the through hole 113 and the part of the hole edge of the mounting hole 115 that are proximal to each other may be 1 mm, 5 mm, 10 mm, 15 mm, 20 mm, 25 mm, or 30 mm.

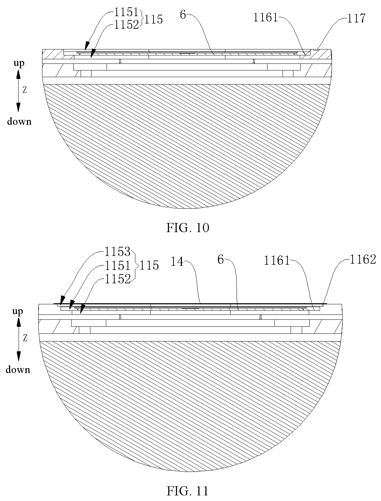

Further referring to FIG. 9 and also referring to FIG. 10, FIG. 10 is an enlarged view of a partial region of a cross-sectional view of a battery cell 10 according to some embodiments of the present application. The mounting hole 115 includes a first hole segment 1151 and a second hole segment 1152 arranged in the thickness direction of the mounting wall 114 and being in communication with each other. The second hole segment 1152 is proximal to the inner cavity of the housing body 111 relative to the first hole segment 1151. A first step surface 1161 is formed between the first hole segment 1151 and the second hole segment 1152. The explosion-proof valve 6 is arranged in the first hole segment 1151 and fitted with the first step surface 1161.

The first hole segment 1151 is in communication with the second hole segment 1152. The hole diameter of the first hole segment 1151 is greater than the hole diameter of the second hole segment 1152, such that the first step surface 1161 can be formed between the first hole segment 1151 and the second hole segment 1152. When the explosion-proof valve 6 is placed in the mounting hole 115, the first step surface 1161 can support the position of the explosion-proof valve 6, so as to arrange the explosion-proof valve 6 on a side of the electrode assembly 2.

The explosion-proof valve 6 is arranged on the mounting wall 114 of the housing body 111, and the electrode assembly 2 is arranged inside the housing body 111. The mounting wall 114 has a certain thickness, and the second hole segment 1152 can separate the first hole segment 1151 from the space inside the housing body 111. In this way, after the explosion-proof valve 6 is arranged on the first step surface 1161, the explosion-proof valve 6 is spaced apart from a component inside the housing body 111 by at least the first hole segment 1151, such that when the air pressure inside the battery cell 10 increases, gas can converge at the first hole segment 1151, and the gas can directly apply pressure to the explosion-proof valve 6 from the first hole segment 1151. When the air pressure in the battery cell 10 is higher than a critical value, the air pressure can damage the explosion-proof valve 6, thereby achieving pressure relief of the battery cell 10.

By arranging the first hole segment 1151 and the second hole segment 1152, the gas can converge at the first hole segment 1151, which helps reduce the air pressure of the gas on other regions of the housing body 111 and enables the gas to converge on one side of the explosion-proof valve 6, thereby facilitating the full use of the explosion-proof valve 6 to relieve the pressure of the battery cell 10.

In addition, by separating apart the explosion-proof valve 6 and the component inside the housing body 111 by at least the first hole segment 1151, the explosion-proof valve 6 can keep a distance from the component inside the housing body 111, which helps reduce the possibility of the explosion-proof valve 6 scratching the component inside the housing body 111.

Referring to FIG. 11, FIG. 11 is an enlarged view of a partial region of a cross-sectional view of a battery cell 10 according to some embodiments of the present application. The mounting hole 115 further includes a third hole segment 1153. The third hole segment 1153 is in communication with one end of the first hole segment 1151 distal to the second hole segment 1152. A second step surface 1162 is formed between the first hole segment 1151 and the third hole segment 1153. The explosion-proof valve 6 is connected to the mounting wall 114 by welding to form a weld seam. The third hole segment 1153 is configured to accommodate the weld seam.

The first hole segment 1151 is located between the second hole segment 1152 and the third hole segment 1153, and the first hole segment 1151, the second hole segment 1152, and the third hole segment 1153 are in communication with each other. The explosion-proof valve 6 is supported on the first step surface 1161, the explosion-proof valve 6 is located in the first hole segment 1151, and the explosion-proof valve 6 is connected to the hole edge of the first hole segment 1151 by welding. When the explosion-proof valve 6 is supported on the first step surface 1161, a seam is formed between the explosion-proof valve 6 and the hole edge of the first hole segment 1151.

The seam between the explosion-proof valve 6 and the hole edge of the first hole segment 1151 may be connected by welding, such as laser welding, ultrasonic welding, or welding with a welding rod. In this way, a weld seam is formed between the explosion-proof valve 6 and the first hole segment 1151. When the explosion-proof valve 6 and the mounting wall 114 are welded together, the welding may be performed from a side of the explosion-proof valve 6 facing away from the internal space of the housing 11 or from a side of the explosion-proof valve 6 facing the interior of the housing 11, which is not limited herein.

For example, when the explosion-proof valve 6 is connected to the hole edge of the first hole segment 1151 by welding using a welding rod, the "weld seam" here refers to a seam formed by melting and connecting the welding rod and metal at the seam using the high temperature of a welding heat source. After the weld metal is cooled, the explosion-proof valve 6 and the mounting wall 114 are connected into a whole.

The first step surface 1161 can pre-position the explosion-proof valve 6, such that after the explosion-proof valve 6 is supported on the first step surface 1161, the welding between the explosion-proof valve 6 and the hole edge of the first hole segment 1151 is facilitated, thereby stably fixing the explosion-proof valve 6 to the mounting wall 114.

When the explosion-proof valve 6 is connected to the mounting wall 114 by welding, the formed weld seam protrudes from the explosion-proof valve 6. The third hole segment 1153 can reserve space for the weld seam, such that when a component is arranged on the mounting wall 114, the possibility of scratching between the component and the weld seam can be reduced, so as to protect the component and the weld seam and enable the weld seam to stably connect the explosion-proof valve 6 and the mounting wall 114, thereby stably fixing the explosion-proof valve 6 on the mounting wall 114.

Referring to FIG. 10, the thickness of the explosion-proof valve 6 extends in the Z direction. The explosion-proof valve 6 is arranged in the first hole segment 1151, and the depth of the first hole segment 1151 in the Z direction is greater than the thickness of the explosion-proof valve 6. In this way, when the explosion-proof valve 6 is fixed on the mounting wall 114 by welding, the first hole segment 1151 can further reserve space for the weld seam.

Further referring to FIG. 11, the housing body assembly 101 further includes a protective sheet 14. The protective sheet 14 is arranged on a side of the explosion-proof valve 6 facing away from the second hole segment 1152 and is configured to cover the explosion-proof valve 6.

The protective sheet 14 may be of a plate-like structure, or may be of a film-like structure, which is not limited herein.

The protective sheet 14 covering the explosion-proof valve 6 can separate the explosion-proof valve 6 from the external environment to achieve a dustproof effect, and the area in which the explosion-proof valve 6 is in contact with external air can be reduced, which helps reduce the oxidation speed of the explosion-proof valve 6.

The protective sheet 14 is arranged on a side of the explosion-proof valve 6 facing away from the second hole segment 1152. The protective sheet 14 is located on a side of the third hole segment 1153. The protective sheet 14 is supported on the mounting wall 114. The third hole segment 1153 is located between the protective sheet 14 and the explosion-proof valve 6. The third hole segment 1153 is configured to reserve space for a weld seam to help reduce the possibility of contact between the protective sheet 14 and the weld seam, thereby facilitating the protection for the protective sheet 14 and reducing the possibility of the protective sheet 14 being scratched by the weld seam.

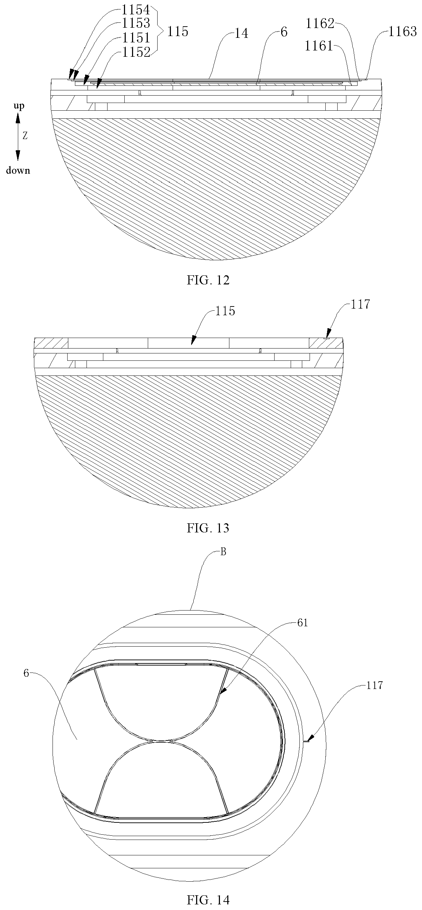

Referring to FIG. 12, FIG. 12 is an enlarged view of a partial region of a cross-sectional view of a battery cell 10 according to some embodiments of the present application. The mounting hole 115 further includes a fourth hole segment 1154. The fourth hole segment 1154 is in communication with one end of the third hole segment 1153 distal to the first hole segment 1151. A third step surface 1163 is formed between the fourth hole segment 1154 and the third hole segment 1153. The protective sheet 14 is arranged in the fourth hole segment 1154 and fitted with the third step surface 1163.

The hole diameter of the fourth hole segment 1154 is greater than the hole diameter of the third hole segment 1153, such that the third step surface 1163 can be formed between the third hole diameter and the fourth hole diameter. The third step surface 1163 is configured to support the position of the protective sheet 14.

The protective sheet 14 is supported on the third step surface 1163 to arrange the protective sheet 14 on a side of the explosion-proof valve 6 facing away from the interior of the housing body 111, thereby enabling the protective sheet 14 to isolate the explosion-proof valve 6 from the external environment to achieve a dustproof effect. When the protective sheet 14 is arranged in the fourth hole segment 1154, the fourth hole segment 1154 can reserve space for arranging the protective sheet 14, such that the protective sheet 14 can be arranged in the mounting hole 115, thereby reducing the protruding volume of the protective sheet 14 from the mounting hole 115, and further helping reduce the possibility of scratching between an object in the external environment and the protective sheet 14, so as to provide the protection for the protective sheet 14.

Further referring to FIG. 12, the depth of the mounting hole 115 extends in an up-down direction, and the mounting hole 115 sequentially includes the fourth hole segment 1154, the third hole segment 1153, the first hole segment 1151, and the second hole segment 1152 from top to bottom. The hole diameters of the fourth hole segment 1154, the third hole segment 1153, the first hole segment 1151, and the second hole segment 1152 sequentially decrease, and the third step surface 1163, the second step surface 1162, and the first step surface 1161 are sequentially defined. The explosion-proof valve 6 is supported on the first step surface 1161, the explosion-proof valve 6 is located on the first hole segment 1151, the protective sheet 14 is supported on the third step surface 1163, and the protective sheet 14 is located on the fourth hole segment 1154.

The second hole segment 1152 separates the first hole segment 1151 from the space inside the housing body 111. In this way, after the explosion-proof valve 6 is arranged on the first step surface 1161, the explosion-proof valve 6 is spaced apart from a component inside the housing body 111 by at least the first hole segment 1151, such that when the air pressure inside the battery cell 10 increases, gas can converge at the first hole segment 1151, and the gas can directly apply pressure to the explosion-proof valve 6 from the first hole segment 1151. When the air pressure in the battery cell 10 is higher than a critical value, the air pressure can damage the explosion-proof valve 6, thereby achieving pressure relief of the battery cell 10.

When the explosion-proof valve 6 is connected to the mounting wall 114 by welding, the formed weld seam protrudes from the explosion-proof valve 6. The third hole segment 1153 can reserve space for the weld seam, such that when a component is arranged on the mounting wall 114, the possibility of scratching between the component and the weld seam can be reduced, so as to protect the component and the weld seam and enable the weld seam to stably connect the explosion-proof valve 6 and the mounting wall 114, thereby stably fixing the explosion-proof valve 6 on the mounting wall 114.

Referring to FIG. 13, FIG. 13 is an enlarged view of a partial region of a cross-sectional view of a battery cell 10 according to some embodiments of the present application. The explosion-proof valve 6 is arranged at the mounting hole 115, and the explosion-proof valve 6 is connected to the hole edge of the mounting hole 115 by welding, such that the explosion-proof valve 6 is fixed on the mounting wall 114 by welding, and the explosion-proof valve 6 can close the mounting hole 115. When the internal pressure of the battery cell 10 is higher than a critical value, the explosion-proof valve 6 can be burst due to the air pressure inside the battery cell 10. In this case, the interior and the exterior of the battery cell 10 are in communication with each other via the through hole 113, thereby achieving the purpose of pressure relief of the battery cell 10.

The hole depth of the mounting hole 115 extends in an up-down direction, the thickness of the explosion-proof valve 6 extends in the up-down direction, and the depth of the mounting hole 115 is greater than the thickness of the explosion-proof valve 6. In this way, after the explosion-proof valve 6 is arranged in the mounting hole 115, a part of space may be reserved below the mounting hole 115, or a part of space may be reserved above the mounting hole 115.

The space reserved below the mounting hole 115 is located between the explosion-proof valve 6 and a component in the housing 11, such that when the air pressure inside the battery cell 10 increases, gas can converge below the explosion-proof valve 6, and the gas can directly apply pressure to the explosion-proof valve 6 from below the explosion-proof valve 6. When the air pressure in the battery cell 10 is higher than a critical value, the air pressure can damage the explosion-proof valve 6, thereby achieving pressure relief of the battery cell 10.

The space reserved above the mounting hole 115 can be set aside as space for the weld seam formed by connecting the explosion-proof valve 6 and the mounting wall 114 by welding. In this way, when a component is arranged on the mounting wall 114, the possibility of scratching between the component and the weld seam can be reduced, so as to protect the component and the weld seam and enable the weld seam to stably connect the explosion-proof valve 6 and the mounting wall 114, thereby stably fixing the explosion-proof valve 6 on the mounting wall 114.

Referring to FIG. 10 and further referring to FIG. 14, FIG. 14 is an enlarged view of part B in FIG. 6. An exhaust groove 117 is arranged on a side of the mounting wall 114 facing away from the inner cavity of the housing body 111. The exhaust groove 117 is in communication with the mounting hole 115, and the protective sheet 14 covers a part of the exhaust groove 117.

After the protective sheet 14 is arranged on the mounting wall 114, at least the third hole segment 1153 is provided between the protective sheet 14 and the explosion-proof valve 6. That is, one side of the protective sheet 14 is the third hole segment 1153, and the other side is the external environment. Allowing the exhaust groove 117 to be in communication with the third hole segment 1153 can balance the air pressure on both sides of the protective sheet 14, such that when the air pressure of the external environment is high or the air pressure in the third hole segment 1153 is high, the possibility of the protective sheet 14 being damaged can be reduced, thereby enabling the protective sheet 14 to fully protect the explosion-proof valve 6.

Optionally, the cross-section of the exhaust groove 117 has a square, trapezoidal, or triangular shape.

The shapes of the cross-sections of different regions of the exhaust groove 117 may also be different. The shape and size of the cross-section of the exhaust groove 117 may be determined according to actual requirements, the size of the mounting wall 114, and the like, which are not limited herein.

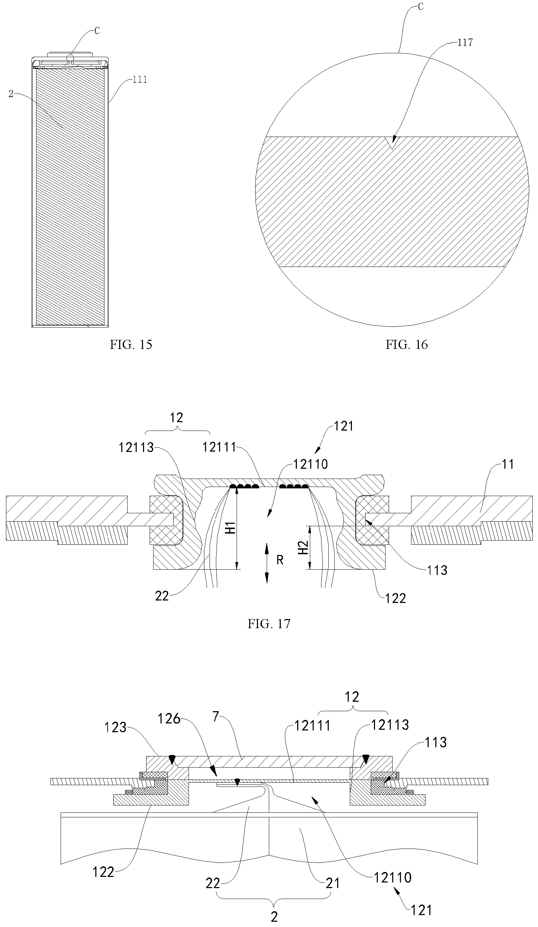

Referring to FIG. 15 and FIG. 16, FIG. 15 is a cross-sectional view of a battery cell 10 according to some embodiments of the present application, and FIG. 16 is an enlarged view of part C in FIG. 15. The cross-section of the exhaust groove 117 has a triangular shape.

Further referring to FIG. 13 and FIG. 14, the explosion-proof valve 6 is of an integrally formed part, and the explosion-proof valve 6 is provided with a thickness reduced part 61.

By performing a treatment such as laser cutting or numerically-controlled punching on the surface of the explosion-proof valve 6, the thicknesses of partial regions of the explosion-proof valve 6 are reduced, thereby forming the thickness reduced part 61. The thickness of the thickness reduced part 61 may be determined according to the pressure endured by the explosion-proof valve 6.

When the air pressure in the battery cell 10 exceeds a critical value, the air pressure can first damage the thickness reduced part 61, and further damage the explosion-proof valve 6, such that the interior of the battery cell 10 is in communication with the external environment, thereby achieving pressure relief of the battery cell 10.

Optionally, the explosion-proof valve 6 is of a split-type structure.

The explosion-proof valve 6 being of a split-type structure means that the explosion-proof valve 6 includes a plurality of components, and the plurality of components cooperate with each other to form the explosion-proof valve 6. The structural strength of the regions where the components cooperate with each other is low. When the air pressure in the battery cell 10 exceeds the critical value, the air pressure can damage the regions where the components cooperate with each other, and further damage the explosion-proof valve 6, such that the interior of the battery cell 10 is in communication with the external environment, thereby achieving pressure relief of the battery cell 10.

Optionally, one post terminal 12 is provided on the mounting wall 114, and the post terminal 12 and the explosion-proof valve 6 are spaced apart from each other in the length direction of the mounting wall 114. The post terminal 12 on the mounting wall 114 may be a positive electrode post terminal 1201, or may be a negative electrode post terminal 1202.

The length direction of the mounting wall 114 extends in the X direction, and the post terminal 12 and the explosion-proof valve 6 are spaced apart from each other in the X direction. By arranging both the post terminal 12 and the explosion-proof valve 6 on the mounting wall 114, the influence of the mounting hole 115 on the structural strength of the mounting wall 114 can be reduced by using the post terminal 12. In addition, by spacing apart the post terminal 12 from the explosion-proof valve 6 in the X direction to arrange the post terminal 12 and the explosion-proof valve 6 at appropriate positions on the mounting wall 114, the reduction of the probability of mutual influence between the post terminal 12 and the explosion-proof valve 6 is facilitated.

Optionally, at least two post terminals 12 are provided on the mounting wall 114, the at least two post terminals 12 are spaced apart from each other in the length direction of the mounting wall 114, and the explosion-proof valve 6 is located between the two post terminals 12. A plurality of post terminals 12 on the mounting wall 114 may all be the positive electrode post terminals 1201 or the negative electrode post terminals 1202; alternatively, a part of the plurality of post terminals are the positive electrode post terminals 1201, and another part of the plurality of post terminals are the negative electrode post terminals 1202.

By allowing the explosion-proof valve 6 to be located between two post terminals 12, the two post terminals 12 are located on both sides of the mounting hole 115 after the post terminals 12 are arranged at the through holes 113, so as to enhance the structural strength of the region on the mounting wall 114 near the mounting hole 115 from the both sides of the mounting hole 115, thereby helping fully reduce the influence of the mounting hole 115 on the structural strength of the mounting wall 114, and fully enhancing the structural strength of the mounting wall 114.

Referring to FIG. 6, two post terminals 12 are provided on the mounting wall 114. The mounting wall 114 extends in a left-right direction. The two post terminals 12 and the explosion-proof valve 6 are spaced apart from each other in the left-right direction. The explosion-proof valve 6 is located between the two post terminals 12. Two through holes 113 are formed on the mounting wall 114, and the two post terminals 12 are arranged in the through holes 113 in a one-to-one correspondence manner. When the through holes 113 and the mounting hole 115 are processed on the mounting wall 114, the through holes 113 and the mounting hole 115 are spaced apart from each other in the length direction of the mounting wall 114. As such, in one aspect, the processing is facilitated, and the situation that the through holes 113 are in communication with the mounting hole 115 is reduced, thereby helping reduce the difficulty in processing; in another aspect, the arrangement of the through holes 113 and the mounting hole 115 at appropriate positions on the mounting wall 114 is facilitated, so as to enable the improvement of the structural strength of the mounting wall 114 as much as possible, and allows a certain distance between the through holes 113 and the mounting hole 115, thereby reducing the possibility of excessively low structural strength of a partial region of the mounting wall 114.

By allowing the explosion-proof valve 6 to be located between two post terminals 12, the two post terminals 12 are located on both sides of the mounting hole 115 after the post terminals 12 are arranged at the through holes 113, so as to enhance the structural strength of the region on the mounting wall 114 near the mounting hole 115 from the both sides of the mounting hole 115, thereby helping fully reduce the influence of the mounting hole 115 on the structural strength of the mounting wall 114, and fully enhancing the structural strength of the mounting wall 114.

Referring to FIG. 5, the mounting wall 114 is located on the wall body of the housing body 111 opposite the opening 1110.

The mounting wall 114 is arranged opposite the opening 1110. That is, if the opening 1110 is located at the lower part of the housing body 111, the upper wall surface of the housing body 111 is formed as the mounting wall 114; if the opening 1110 is located on the left side wall of the housing body 111, the right side wall of the housing body 111 is formed as the mounting wall 114; and if the opening 1110 is located on the front side wall of the housing body 111, the rear side wall of the housing body 111 is formed as the mounting wall 114.

By allowing the mounting wall 114 to be located on the wall body of the housing body 111 opposite the opening 1110, it is convenient for the post terminal 12 on the mounting wall 114 to be arranged directly opposite the electrode assembly 2 when the electrode assembly 2 is mounted inside the housing body 111, and further, when the electrode assembly 2 is mounted to a designated position, the electrical connection between the post terminal 12 and the electrode assembly 2 is facilitated.

Referring to FIG. 5, the present application further provides a battery cell 10. The battery cell 10 includes the housing body assembly 101, the electrode assembly 2, and the housing cover 112 according to any one of the above solutions. The electrode assembly 2 is disposed in the housing body 111 and includes an active substance-coated part 21 and a conductive part 22 connected to the active substance-coated part 21. The conductive part 22 is electrically connected to the post terminal 12. The housing cover 112 lids the opening 1110 to encapsulate the electrode assembly 2 in the housing body 111.

By arranging the post terminal 12 on the mounting wall 114 of the housing body 111, the structural strength of the mounting wall 114 is increased by using the post terminal 12, such that the mounting wall 114 is not easily deformed, thereby enhancing the protective effect of the housing body 111 on the electrode assembly 2 and facilitating the control over the consistency of the burst pressure of the explosion-proof valve 6.

Referring to FIG. 5 and further referring to FIG. 17 and FIG. 18, FIG. 17 is a partial cross-sectional schematic view of a battery cell 10 according to some embodiments of the present application. FIG. 18 is a partial cross-sectional schematic view of a battery cell 10 according to some embodiments of the present application. The mounting wall 114 is located on the wall body of the housing body 111 opposite the opening 1110. An accommodating part 121 is formed in the post terminal 12. At least a part of the conductive part 22 extends into the accommodating part 121, and the conductive part 22 is electrically connected to the post terminal 12. That is, the post terminal 12 is configured into a hollow structure.

As used herein, the "at least a part" means that the conductive part 22 may be completely accommodated in the accommodating part 121, or only a part of the conductive part 22 may be accommodated in the accommodating part 121. Since the post terminal 12 is provided with the accommodating part 121, the hollow structure of the accommodating part 121, in one aspect, can reduce the weight of the post terminal 12 to a certain extent, thereby improving the gravimetric energy density of the battery cell 10 and the battery 100; in another aspect, the conductive part 22 can be accommodated in the accommodating part 121, improving the assembly efficiency of the conductive part 22 and helping reduce the space occupied by the conductive part 22, such that the space of the battery cell 10 is fully used, thereby enabling a more compact structure of the battery cell 10 and more facilitating the improvement of the energy density of the battery cell 10.

More specifically, by partially or completely accommodating the conductive part 22 in the accommodating part 121 to make the part of the conductive part 22 located in the accommodating part 121 occupy a space in the post terminal 12, the space occupied by the conductive part 22 in the housing 11 can be reduced; in a given size of the housing 11, some space can be saved in the housing 11 to accommodate an active substance-coated part 21 with a greater size, thereby improving the volumetric energy density of the battery cell 10. For example, when the conductive part 22 is led out from a side of the active substance-coated part 21 proximal to the post terminal 12, the space occupied by the conductive part 22 between the active substance-coated part 21 and the post terminal 12 can be saved, so as to increase the size of the active substance-coated part 21 in the direction in which the conductive part 22 is led out, reduce the distance between the active substance-coated part 21 and the post terminal 12, and improve the energy density of the battery cell 10.

In addition, by accommodating at least a part of the conductive part 22 in the accommodating part 121, the space occupied by the battery cell 10 itself can be reduced, such that a battery 100 of the same volume can accommodate a greater number of battery cells 10, thereby further improving the volumetric energy density of the battery 100. Furthermore, by accommodating at least a part of the conductive part 22 in the accommodating part 121 to occupy a space in the post terminal 12, the redundancy of the conductive part 22 in the housing 11 can be reduced to at least a certain extent, the probability of short circuit between the conductive part 22 and the active substance-coated part 21 can be reduced, and the probability of short circuit of the battery cell 10 can be reduced, thereby improving the working reliability and stability of the battery cell 10 and the battery 100.

It should be noted that in the embodiments of the present application, the accommodating part 121 may be located on a side of the post terminal 12 proximal to the active substance-coated part 21, or may be located on a side of the post terminal 12 distal to the active substance-coated part 21.

Illustratively, referring to FIG. 17 and FIG. 18 again, when the accommodating part 121 is located on the side of the post terminal 12 facing the active substance-coated part 21, the accommodating part 121 includes a first accommodating groove 12110, and the surface of the post terminal 12 on a side facing the active substance-coated part 21 is the post terminal inner end surface 122. The opening of the first accommodating groove 12110 is formed on the post terminal inner end surface 122, and at least a part of the conductive part 22 is accommodated in the first accommodating groove 12110.

Illustratively, the first accommodating groove 12110 is a groove body, and the groove body is of a groove-shaped structure of a certain depth. For example, when the post terminal 12 is arranged on the upper end wall of the housing 11 and the post terminal inner end surface 122 is the lower surface of the post terminal 12, the first accommodating groove 12110 is formed as an accommodating groove with an opening open downward and a wall recessed upward. For another example, when the post terminal 12 is arranged on the lower end wall of the housing 11 and the post terminal inner end surface 122 is the upper surface of the post terminal 12, the first accommodating groove 12110 is formed as an accommodating groove with an opening open upward and a wall recessed downward.

In the above technical solution, in one aspect, the formation of the first accommodating groove 12110 on the post terminal 12 can reduce the weight of the post terminal 12 to a certain extent, so as to improve the gravimetric energy density of the battery cell 10 and the battery 100. In another aspect, since the opening of the first accommodating groove 12110 is formed on the post terminal inner end surface 122 and the post terminal inner end surface 122 is the surface of the post terminal 12 on a side proximal to the active substance-coated part 21, the first accommodating groove 12110 may be open toward the active substance-coated part 21, which facilitates the extension of the conductive part 22 into the first accommodating groove 12110, thereby improving the assembly efficiency. Moreover, the first accommodating groove 12110 in this configuration is easy to process and thus improves production efficiency.

Furthermore, the first accommodating groove 12110 is easy to process to have a great volume to accommodate more conductive parts 22. In addition, since the first accommodating groove 12110 is open toward the active substance-coated part 21, the first accommodating groove 12110 may also serve as a buffering and temporary storage structure for the electrolyte, such that a greater amount of electrolyte can be accommodated in the housing 11; since the electrolyte will be consumed during the charging and discharging process of the battery cell 10, a greater amount of electrolyte can prolong the service life of the battery cell 10. Also, since the first accommodating groove 12110 is open toward the active substance-coated part 21, the first accommodating groove 12110 may also serve as an accommodating and buffering structure for gas generated inside the electrode assembly 2, so as to reduce the expansion of the battery cell 10, thereby improving the reliability and stability of the battery cell 10.

Furthermore, since the first accommodating groove 12110 is located on the inner side of the post terminal 12, external foreign matters and impurities cannot easily enter the first accommodating groove 12110, thereby helping reduce the influence of external foreign matters and impurities on the electrode assembly 2, improve the working stability and reliability of the electrode assembly 2, and further improve the stability and reliability of the battery cell 10 and the battery 100.

Referring to FIG. 17 again, in the embodiments of the present application, the connection manner between the post terminal 12 and the housing 11 is not limited. For example, the connection manner may be welding or riveting. For example, when the two are fitted by riveting, the housing 11 is provided with a through hole 113, and the post terminal 12 is mounted by riveting at the through hole 113. Certainly, it can be understood that when the two are fitted by welding or other manners, the housing 11 may also be provided with a through hole 113 to facilitate the mounting of the post terminal 12 in the housing 11 via the through hole 113, which is not limited herein.

In addition, the first accommodating groove 12110 may be arranged corresponding to the position of the through hole 113, or in other words, on the projection plane perpendicular to the axial direction R of the post terminal 12. The orthographic projection of the first accommodating groove 12110 is located within the orthographic projection range of the through hole 113, such that the first accommodating groove 12110 can have a great depth to accommodate more conductive parts 22, thereby reducing the space occupied by the conductive part 22 in the housing 11 to a greater extent. Specifically, when the through hole 113 is formed on the housing 11 and the post terminal 12 is mounted in the through hole 113, in the axial direction R of the post terminal 12, the depth H1 of the first accommodating groove 12110 is greater than or equal to the minimum distance H2 from the post terminal inner end surface 122 to the through hole 113.

It should be noted that the specific shape of the first accommodating groove 12110 is not limited, and may be a regular shape or an irregular shape, for example, a columnar groove of constant cross-section with a rectangular, elliptical, or track-shaped cross-section, a trapezoidal groove with a rectangular cross-section and a gradually changing cross-sectional size, a hemispherical groove with a circular cross-section and a gradually changing cross-sectional size, a semi-ellipsoidal groove with an elliptical cross-section and a gradually changing cross-sectional size, or the like. Therefore, the depth H1 of the first accommodating groove 12110 refers to: the maximum depth of the first accommodating groove 12110 in the axial direction R of the post terminal 12.

Since the depth H1 of the first accommodating groove 12110 in the axial direction R of the post terminal 12 is greater than or equal to the minimum distance H2 from the post terminal inner end surface 122 to the through hole 113, the volume of the post terminal 12 can be fully used, such that the first accommodating groove 12110 has a great depth, which is conducive to accommodating more conductive parts 22, thereby reducing the space occupied by the conductive parts 22 in the housing 11 to a greater extent, further improving the energy density of the battery cell 10, and further reducing the redundancy of the conductive parts 22 in the housing 11. In addition, due to the great depth, the first accommodating groove 12110 can accommodate the gas generated by the electrode assembly 2 to improve the reliability and stability of the battery cell 10, and can also accommodate a greater amount of electrolyte to prolong the service life of the battery cell 10.

Referring to FIG. 17 and FIG. 18 again, in order to improve the stability and reliability of the electrical connection between the active substance-coated part 21 and the post terminal 12, in some embodiments of the present application, the electrical connection position of the conductive part 22 and the post terminal 12 may be located on the wall of the first accommodating groove 12110 formed by the accommodating part 121.

Illustratively, the conductive part 22 and the post terminal 12 may be electrically connected by welding, and the electrical connection position is the welding position of the conductive part 22 and the post terminal 12. In addition, the welding manner between the conductive part 22 and the post terminal 12 is not limited, which may be laser welding, for example. Moreover, depending on factors such as the position, angle, or structure of the welding part, vertical welding or inclined welding, and overlap welding or edge sealing welding may be selected. In other embodiments of the present application, the conductive part 22 and the post terminal 12 may be electrically connected by other means instead of welding, such as by providing conductive adhesive or conductive nails. In order to simplify the description, the following description will take an example that the conductive part 22 is welded to the post terminal 12 to form an electrical connection, and that the welding position is the electrical connection position of the conductive part 22 and the post terminal 12.

Specifically, the post terminal 12 includes a first end wall 12111 and a first side wall 12113, the first end wall 12111 is located on a side of the first side wall 12113 distal to the active substance-coated part 21, the first end wall 12111 and the first side wall 12113 define, in an enclosing manner, the first accommodating groove 12110, and the electrical connection position of the conductive part 22 and the post terminal 12 is located on the first end wall 12111 and/or the first side wall 12113. That is, the conductive part 22 may be welded to at least one of the first end wall 12111 and the first side wall 12113.

In the above technical solution, by arranging the electrical connection position of the conductive part 22 and the post terminal 12 on at least one of the first end wall 12111 and the first side wall 12113, not only does the first accommodating groove 12110 have the function of accommodating at least a part of the conductive part 22, but also the wall of the first accommodating groove 12110 has the function of achieving the electrical connection to the conductive part 22, which can simplify the structure of the post terminal 12 to facilitate the processing of the post terminal 12, and can also simplify the structure of the conductive part 22 to reduce the redundancy of the conductive part 22 and reduce the cost of the conductive part 22. Moreover, by using the wall of the first accommodating groove 12110 to achieve the electrical connection to the conductive part 22, the connection region of the conductive part 22 and the post terminal 12 can be set to be great, which not only can reduce the difficulty in electrical connection, but also improve the reliability and stability of the electrical connection, thereby improving the performance of the battery cell 10.

In addition, since the electrical connection position of the conductive part 22 and the post terminal 12 is located in the first accommodating groove 12110, not only can the electrical connection position be prevented from protruding out of the post terminal 12 and occupying the space outside the post terminal 12, but also the electrical connection position can be protected by the post terminal 12, thereby improving the reliability and stability of the electrical connection between the conductive part 22 and the post terminal 12.

Furthermore, in the embodiments of the present application, the first end wall 12111 is configured as a closed structure without a perforation 12130, such that the first accommodating groove 12110 is isolated from the space outside the housing 11, thereby alleviating the problem of the electrolyte in the housing 11 leaking from the first accommodating groove 12110.

Referring to FIG. 17 and FIG. 18 again, in some optional embodiments, the conductive part 22 and the first end wall 12111 match in partial shape and are arranged to fit and electrically connected, such that the electrical connection position of the conductive part 22 and the first end wall 12111 extends in the length or width direction of the first end wall 12111. For example, when the first end wall 12111 is flat, a part of the conductive part 22 may also be flat and fit the first end wall 12111, and the fitting position is electrically connected, such as by welding. As such, the area of the electrical connection can be increased, and the reliability and stability of the electrical connection can be improved.

In addition, when the conductive part 22 is electrically connected to the first end wall 12111 by welding, the location of the first end wall 12111 on the side of the first accommodating groove 12110 distal to the active substance-coated part 21 may facilitate the welding operation. For example, the welding may be performed from the side of the post terminal 12 distal to the active substance-coated part 21.

It is worth noting that the shape of the first end wall 12111 is not limited, for example, the shape may be a flat-plate shape, an arc-plate shape, or the like. When the first end wall 12111 is of a flat-plate structure, the first end wall 12111 is arranged at an included angle with the axial direction R of the post terminal 12. For example, the first end wall may be of a flat-plate structure perpendicular to the axial direction R of the post terminal 12, or may be of an inclined-plate structure that is not perpendicular to the axial direction R of the post terminal 12, where, however, the inclination direction is not limited.

Certainly, in other embodiments of the present application, the electrical connection position of the conductive part 22 and the first end wall 12111 may not extend in the length or width direction of the first end wall 12111, but may be, for example, a plurality of discretely arranged points. For example, the conductive part 22 is provided with a plurality of parts that are spaced apart from each other and separately welded to the first end wall 12111, which will not be described in detail herein.

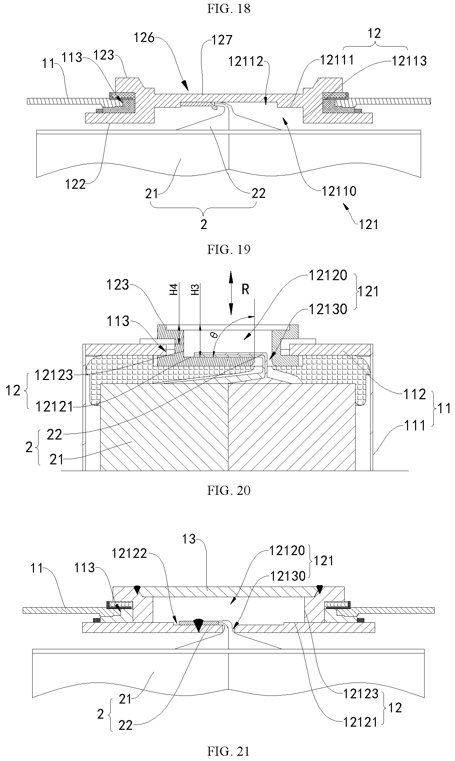

Referring to FIG. 19, FIG. 19 is a partial cross-sectional view of a battery cell 10 according to some embodiments of the present application. When the conductive part 22 is electrically connected to the first end wall 12111, a first recess 12112 may be arranged on the first end wall 12111, and the recess direction of the first recess 12112 is a direction facing away from the active substance-coated part 21. At least a part of the electrical connection position of the conductive part 22 and the first end wall 12111 is located within the first recess 12112. Illustratively, at least a part of the conductive part 22 may be arranged within the first recess 12112 and connected to a part of the first end wall 12111 configured to define the first recess 12112.

In the above technical solution, in one aspect, the first recess 12112 can be used to achieve the pre-positioning and limiting of the electrical connection position of the conductive part 22, which is not only conducive to accurately finding the position to achieve the electrical connection and improving the production efficiency, but also conducive to improving the stability and reliability of the conductive part 22 and improving the stability and reliability of the battery cell 10 during the charging and discharging process. In another aspect, by arranging the first recess 12112 on the first end wall 12111, the local wall thickness of the first end wall 12111 can be locally reduced, which is not only conducive to welding, but also conducive to reducing the weight of the post terminal 12 and improving the gravimetric energy density of the battery cell 10.

Referring to FIG. 18 and FIG. 19 again, in the embodiments of the present application, the post terminal 12 may also be provided with a first groove 126 according to requirements, and the first groove 126 is located on a side of the post terminal 12 distal to the active substance-coated part 21; or in other words, the surface of the post terminal 12 on a side distal to the active substance-coated part 21 is a post terminal outer end surface 123, and the opening of the first groove 126 is formed on the post terminal outer end surface 123.

It can be understood that the first groove 126 is a groove body, and the groove body is of a groove-shaped structure of a certain depth. Moreover, when the post terminal 12 is arranged on the upper end wall of the housing 11 and the post terminal outer end surface 123 is the upper surface of the post terminal 12, the first groove 126 is formed as a first groove 126 with an opening upward and a wall recessed downward (or in other words, recessed in a square shape close to the electrode assembly 2). For another example, when the post terminal 12 is arranged on the lower end wall of the housing 11 and the post terminal outer end surface 123 is the lower surface of the post terminal 12, the first groove 126 is formed as a first groove 126 with an opening downward and a wall recessed upward (or in other words, recessed in a square shape away from the electrode assembly 2).

In the above technical solution, in one aspect, since the post terminal 12 is provided with the first groove 126, the weight of the post terminal 12 can be further reduced, such that the gravimetric energy density of the battery cell 10 and the battery 100 can be improved. In another aspect, the first groove 126 is located on the outer side of the post terminal 12, that is, the first groove is open to a side of the post terminal 12 facing away from the interior of the housing 11, such that the first groove 126 can be used to accommodate or mount structural components of the battery 100 that electrically connect battery cells 10, so as to make full use of the space in the post terminal 12, thereby improving the space utilization rate and volumetric energy density of the battery 100.

In addition, since the post terminal 12 is provided with both the first accommodating groove 12110 and the first groove 126, the first groove 126 is located on the side of the first accommodating groove 12110 distal to the active substance-coated part 21, and the first groove 126 is open in a direction facing away from the first accommodating groove 12110, the conductive part 22 can be laser-welded to the first end wall 12111 through the first groove 126 from the outer side of the post terminal 12, that is, the side of the post terminal 12 distal to the active substance-coated part 21; or in other words, the electrical connection between the conductive part 22 and the post terminal 12 is facilitated by external welding. That is, the above structural arrangement can facilitate external welding of the post terminal 12 to the conductive part 22 through the first groove 126, which facilitates the processing and manufacture of the battery cell 10 and can save processing and manufacturing costs.

Further, in order to conveniently and effectively weld the conductive part 22 to the wall of the first accommodating groove 12110 through the first groove 126 and improve the reliability of the welding of the conductive part 22 to the wall of the first accommodating groove 12110, in the embodiments of the present application, the part between the first groove 126 and the first accommodating groove 12110 can be laser welded to the conductive part 22; or in other words, the spacer part 127 shown in FIG. 19 is laser welded to the conductive part 22 to achieve the electrical connection between the electrode assembly 2 and the post terminal 12. The spacer part 127 of the post terminal 12 located between the first groove 126 and the first accommodating groove 12110 is thin. The spacer part 127 isolates the first groove 126 from the first accommodating groove 12110. The wall surface of the spacer part 127 on a side proximal to the active substance-coated part 21 can be used as the first end wall 12111. When the conductive part 22 is required to be welded to the first end wall 12111, since the spacer part 127 is thin, the welding of the conductive part 22 to the first end wall 12111 can be achieved through the first groove 126, thereby improving the convenience and reliability of welding.

Referring to FIG. 18 again, the battery cell 10 may further include a groove cover 7. The groove cover 7 is arranged on the post terminal 12 and closes the opening of the first groove 126. In the above technical solution, by arranging the groove cover 7 that closes the first groove 126, the post terminal 12 can be indirectly electrically connected to a busbar component through the groove cover 7. In addition, through the arrangement of the position and structure of the groove cover 7, the electrical connection between the groove cover 7 and the busbar component can be more convenient, and the electrical connection area can be greater. As such, by arranging the groove cover 7, the electrical connection between adjacent battery cells 10 in the battery 100 can be facilitated, and since the electrical connection positions of the battery cells 10 are located at the groove cover 7, which can be separated from the electrical connection position of the conductive part 22 and the post terminal 12 through the first groove 126, there is less interference between the two, which can further improve the stability and reliability of the battery cell 10.

Illustratively, referring to FIG. 20, FIG. 20 is a partial cross-sectional view of a battery cell 10 according to some embodiments of the present application. The accommodating part 121 may also be configured to include a second accommodating groove 12120, the surface of the post terminal 12 on a side distal to the active substance-coated part 21 is a post terminal outer end surface 123, an opening of the second accommodating groove 12120 is formed on the post terminal outer end surface 123, the second accommodating groove 12120 is in communication with the interior of the housing 11 through a perforation 12130, the conductive part 22 is provided in the perforation 12130 in a penetrating manner, and at least a part of the conductive part is accommodated in the second accommodating groove 12120.

It can be understood that the second accommodating groove 12120 is a groove body, and the groove body is of a groove-shaped structure of a certain depth. For example, when the post terminal 12 is arranged on the upper end wall of the housing 11 and the post terminal outer end surface 123 is the upper surface of the post terminal 12, the second accommodating groove 12120 is formed as an accommodating groove with an opening open upward and a wall recessed downward. For another example, when the post terminal 12 is arranged on the lower end wall of the housing 11 and the post terminal outer end surface 123 is the lower surface of the post terminal 12, the second accommodating groove 12120 is formed as an accommodating groove with an opening open downward and a wall recessed upward.

In the above technical solution, referring to FIG. 20 again, in one aspect, the arrangement of the second accommodating groove 12120 on the post terminal 12 can reduce the weight of the post terminal 12 to a certain extent, so as to improve the gravimetric energy density of the battery cell 10 and the battery 100. In another aspect, since the opening of the second accommodating groove 12120 is formed on the post terminal outer end surface 123 and the post terminal outer end surface 123 is the surface of the post terminal 12 on a side distal to the active substance-coated part 21, the second accommodating groove 12120 can be open in a direction facing away from the active substance-coated part 21. In this way, when at least a part of the conductive part 22 is accommodated in the second accommodating groove 12120, the accommodation and arrangement of the conductive part 22 can be easily achieved through the opening of the second accommodating groove 12120, and the electrical connection operation between the conductive part 22 and the post terminal 12 can be easily achieved through the opening of the second accommodating groove 12120, etc., thereby helping reduce the difficulty in producing the battery cell 10 and improving the production efficiency of the battery cell 10.

In addition, since the second accommodating groove 12120 is in communication with the interior of the housing 11 through the perforation 12130, the second accommodating groove 12120 may also serve as a buffering and temporary storage structure for the electrolyte, such that a greater amount of electrolyte can be accommodated in the housing 11; since the electrolyte will be consumed during the charging and discharging process of the battery cell 10, a greater amount of electrolyte can prolong the service life of the battery cell 10. Also, since the second accommodating groove 12120 is in communication with the interior of the housing 11 through the perforation 12130, that the second accommodating groove 12120 may also serve as an accommodating and buffering structure for gas generated inside the electrode assembly 2, so as to reduce the expansion of the battery cell 10, thereby improving the reliability and stability of the battery cell 10.

It is worth noting that when the accommodating part 121 is provided with the second accommodation groove 12120, the conductive part 22 is provided in the perforation 12130 in a penetrating manner, and at least a part of the conductive part is accommodated in the second accommodating groove 12120, the electrical connection position of the conductive part 22 and the post terminal 12 is not limited. Illustratively, when the conductive part 22 is provided in the perforation 12130 in a penetrating manner and at least a part of the conductive part is accommodated in the second accommodating groove 12120, in the embodiments of the present application, the electrical connection position of the conductive part 22 and the post terminal 12 is located on the wall of the perforation 12130 formed by the post terminal 12.

In the above technical solution, by arranging the electrical connection position of the conductive part 22 and the post terminal 12 on the wall of the perforation 12130, the electrical connection operation between the conductive part 22 and the post terminal 12 through the second accommodating groove 12120 can be facilitated. In addition, when the electrical connection area between the conductive part 22 and the post terminal 12 is great, the sealing of the perforation 12130 can be achieved by using the electrical connection between the conductive part 22 and the post terminal 12, so as to save the sealing costs, reduce the electrolyte leakage, and save sealing members.

Specifically, the conductive part 22 can be welded to the wall of the perforation 12130 at a position where the perforation 12130 is connected to the second accommodating groove 12120 to facilitate the operation. Moreover, by controlling the weld mark, the sealing of the perforation 12130 can be achieved by using the weld mark and the conductive part 22, so as to alleviate the problem of the electrolyte in the housing 11 leaking from the perforation 12130.

Further illustratively, when the conductive part 22 is provided in the perforation 12130 in a penetrating manner and at least a part of the conductive part is accommodated in the second accommodating groove 12120, in some other embodiments of the present application, the electrical connection position of the conductive part 22 and the post terminal 12 may also be located on the wall of the second accommodating groove 12120 formed by the post terminal 12. As such, the electrical connection operation is facilitated. For example, when the conductive part 22 is welded to the wall of the second accommodating groove 12120 formed by the post terminal 12, the conductive particles generated by welding can be prevented from entering the housing 11, which may otherwise cause short circuits and other problems.

Referring to FIG. 20 again, the post terminal 12 includes a second end wall 12121 and a second side wall 12123, the second end wall 12121 is located on a side of the second side wall 12123 proximal to the active substance-coated part 21, the second end wall 12121 and the second side wall 12123 define, in an enclosing manner, the second accommodating groove 12120, the perforation 12130 is formed on the second end wall 12121, and the electrical connection position of the conductive part 22 and the post terminal 12 is located on the second end wall 12121 and/or the second side wall 12123.

More specifically, the conductive part 22 and the post terminal 12 may be electrically connected by welding. Therefore, the welding position is the electrical connection position of the conductive part 22 and the post terminal 12. In other embodiments of the present application, the conductive part 22 and the post terminal 12 may be electrically connected by other means instead of welding, such as by providing conductive adhesive or conductive nails, which will not be described in detail herein.

In order to simplify the description, the following description will take an example that the conductive part 22 is welded to the post terminal 12 to form an electrical connection, and that the welding position is the electrical connection position of the conductive part 22 and the post terminal 12. For example, in some embodiments, the electrical connection position of the conductive part 22 and the post terminal 12 being located on the second end wall 12121 and/or the second side wall 12123 may be that the conductive part 22 is welded to at least one of the second end wall 12121 and the second side wall 12123.

In the above technical solution, by arranging the electrical connection position of the conductive part 22 and the post terminal 12 on at least one of the second end wall 12121 and the second side wall 12123, not only does the second accommodating groove 12120 have the function of accommodating at least a part of the conductive part 22, but also the wall of the second accommodating groove 12120 has the function of achieving the electrical connection to the conductive part 22, which can simplify the structure of the post terminal 12 and facilitate the processing of the post terminal 12. Moreover, since the perforation 12130 is formed on the second end wall 12121, the extension of the conductive part 22 into the second accommodating groove 12120 through the perforation 12130 is facilitated, which can simplify the structure of the conductive part 22, reduce the redundancy of the conductive part 22, and reduce the cost of the conductive part 22. Furthermore, the opening direction of the opening of the second accommodating groove 12120 enables the electrical connection operation on the conductive part 22 and the wall of the second accommodating groove 12120 to be easily performed through the opening of the second accommodating groove 12120, which can reduce the difficulty in the electrical connection. Furthermore, by using the wall of the second accommodating groove 12120 to achieve the electrical connection to the conductive part 22, the electrical connection region of the conductive part 22 and the post terminal 12 can be great, which can improve the reliability and stability of the electrical connection and further improve the performance of the battery cell 10.

In addition, since the electrical connection position of the conductive part 22 and the post terminal 12 is located in the second accommodating groove 12120, not only can the electrical connection position be prevented from protruding out of the post terminal 12 and occupying the space outside the post terminal 12, but also the electrical connection position can be protected by the post terminal 12, thereby improving the reliability and stability of the electrical connection between the conductive part 22 and the post terminal 12.

Referring to FIG. 20 again, in some embodiments, the conductive part 22 and the second end wall 12121 match in partial shape and are arranged to fit and electrically connected, such that the electrical connection position of the conductive part 22 and the second end wall 12121 extends in the length or width direction of the second end wall 12121. For example, when the second end wall 12121 is flat, a part of the conductive part 22 may also be flat and fit the second end wall 12121, and the fitting position is electrically connected, such as by welding. As such, the area of the electrical connection can be increased, and the reliability and stability of the electrical connection can be improved.

It is worth noting that the shape of the second end wall 12121 is not limited. For example, the second end wall may be of a flat-plate structure or an arc-plate structure. When the second end wall 12121 is of a flat-plate structure, the second end wall 12121 is arranged at an included angle with the axial direction R of the post terminal 12. For example, the second end wall may be of a flat-plate structure perpendicular to the axial direction R of the post terminal 12, or may be of an inclined-plate structure that is not perpendicular to the axial direction R of the post terminal 12, where, however, the inclination direction is not limited.

For example, referring to FIG. 20 again, when the second end wall 12121 is of a flat-plate structure, the included angle θ between the second end wall 12121 and the axial direction R of the post terminal 12 is equal to 90°. That is, in the direction from the perforation 12130 to the second side wall 12123, the second end wall 12121 and the active substance-coated part 21 are equidistant. As such, the welding of the conductive part 22 to the second end wall 12121 is facilitated.

For another example, the included angle θ between the second end wall 12121 and the axial direction R of the post terminal 12 is greater than 90°. That is, in the direction from the perforation 12130 to the second side wall 12123, the second end wall 12121 extends obliquely in a direction toward the active substance-coated part 21. As such, the extension distance of the conductive part 22 along the second end wall 12121 can be increased, so as to improve the reliability of the electrical connection. Illustratively, the included angle θ between the second end wall 12121 and the axial direction R of the post terminal 12 may be 90°-145°, for example, 100°, 110°, 120°, 130°, 140°, etc., such that in one aspect, the second end wall 12121 can be easy to process and convenient to be electrically connected to the conductive part 22, and in another aspect, the space in the post terminal 12 can be fully used to accommodate the conductive part 22.

For yet another example, the included angle θ between the second end wall 12121 and the axial direction R of the post terminal 12 is less than 90°. That is, in the direction from the perforation 12130 to the second side wall 12123, the second end wall 12121 extends obliquely in a direction away from the active substance-coated part 21.

As such, the extension distance of the conductive part 22 along the second end wall 12121 can be increased, so as to improve the reliability of the electrical connection. Illustratively, the included angle θ between the second end wall 12121 and the axial direction R of the post terminal 12 may be 45°-90°, for example, 50°, 60°, 70°, 80°, etc., such that in one aspect, the second end wall 12121 can be easy to process and convenient to be electrically connected to the conductive part 22, and in another aspect, the space in the post terminal 12 can be fully used to accommodate the conductive part 22.

Certainly, the present application is not limited to this. In other embodiments of the present application, the electrical connection position of the conductive part 22 and the second end wall 12121 may not extend in the length or width direction of the second end wall 12121, but may be, for example, a plurality of discretely arranged points. For example, the conductive part 22 is provided with a plurality of parts that are spaced apart from each other and separately welded to the second end wall 12121, which will not be described in detail herein.

Referring to FIG. 20 again and further referring to FIG. 21, FIG. 21 is a partial cross-sectional view of a battery cell 10 according to some embodiments of the present application. Regardless of the specific value of the included angle θ between the second end wall 12121 and the axial direction R of the post terminal 12, in the embodiments of the present application, when the conductive part 22 is electrically connected to the second end wall 12121, a second recess 12122 may be arranged on the second end wall 12121 according to requirements. The second recess 12122 is a groove formed by a part of the second end wall 12121 recessed toward an end proximal to the active substance-coated part 21. At least a part of the electrical connection position of the conductive part 22 and the second end wall 12121 is located in the second recess 12122.

In the above technical solution, by arranging the part of the conductive part 22 located in the second recess 12122 and the second recess 12122 to match in shape and to fit to achieve the electrical connection, the second recess 12122 can be used to pre-position and limit the electrical connection position of the conductive part 22, which is conducive to accurately finding the position to achieve the electrical connection, thereby improving the production efficiency and improving the stability and reliability of the electrical connection position, so as to improve the reliability and stability of the charging and discharging operations of the battery cell 10.

Referring to FIG. 21 again, in the embodiments of the present application, the connection manner between the post terminal 12 and the housing 11 is not limited. For example, the connection manner may be welding or riveting. For example, when the two are fitted by riveting, the housing 11 is provided with a through hole 113, and the post terminal 12 is mounted by riveting at the through hole 113. Certainly, it can be understood that when the two are fitted by welding or other manners, the housing 11 may also be provided with a through hole 113, and the post terminal 12 is mounted at the through hole 113.

Optionally, referring to FIG. 20 again, the second accommodating groove 12120 may be arranged corresponding to the position of the through hole 113, or in other words, on the projection plane perpendicular to the axial direction R of the post terminal 12. The orthographic projection of the second accommodating groove 12120 is located within the orthographic projection range of the through hole 113, such that the second accommodating groove 12120 can have a great depth to accommodate more conductive parts 22, thereby reducing the space occupied by the conductive part 22 in the housing 11 to a greater extent.

In some embodiments, referring to FIG. 20 again, when the housing 11 is provided with a through hole 113 and the post terminal 12 is mounted in the through hole 113, in the axial direction R of the post terminal 12, the depth H3 of the second accommodating groove 12120 is greater than or equal to the minimum distance H4 from the post terminal outer end surface 123 to the through hole 113.

It should be noted that the specific shape of the second accommodating groove 12120 is not limited, and may be a regular shape or an irregular shape, for example, a columnar groove of constant cross-section with a rectangular, elliptical, or track-shaped cross-section, a trapezoidal groove with a rectangular cross-section and a gradually changing cross-sectional size, a hemispherical groove with a circular cross-section and a gradually changing cross-sectional size, a semi-ellipsoidal groove with an elliptical cross-section and a gradually changing cross-sectional size, or the like. It is worth noting that the running-track shape described herein refers to a shape in which the two short sides of a rectangle are replaced by convex curves.

Therefore, the depth H3 of the second accommodating groove 12120 refers to: the maximum depth of the second accommodating groove 12120 in the axial direction R of the post terminal 12. Since the depth H3 of the second accommodating groove 12120 in the axial direction R of the post terminal 12 is greater than or equal to the minimum distance H4 from the post terminal outer end surface 123 to the through hole 113, the volume of the post terminal 12 can be fully used, such that the second accommodating groove 12120 has a great depth, which is conducive to accommodating more conductive parts 22, thereby reducing the space occupied by the conductive parts 22 in the housing 11 to a greater extent, further improving the energy density of the battery cell 10, and further reducing the redundancy of the conductive parts 22 in the housing 11. In addition, due to the great depth, the second accommodating groove 12120 can accommodate the gas generated by the electrode assembly 2 to improve the reliability and stability of the battery cell 10, and can also accommodate a greater amount of electrolyte to prolong the service life of the battery cell 10.

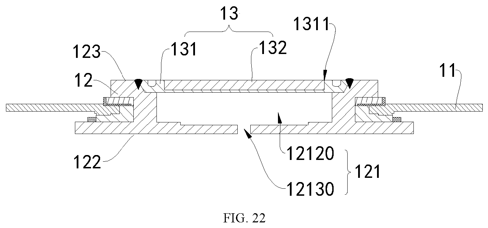

Referring to FIG. 21 again and further referring to FIG. 22, FIG. 22 is a partial cross-sectional schematic view of a battery cell 10 according to some embodiments of the present application. In the embodiments of the present application, when the accommodating part 121 is provided with the second accommodating groove 12120 according to any one of the above embodiments, optionally, the battery cell 10 may further include a cover plate 13. The cover plate 13 is fitted with the post terminal 12 and closes the opening of the second accommodating groove 12120, and the cover plate 13 is electrically connected to the post terminal 12.

In the above technical solution, by arranging the cover plate 13 to close the opening of the second accommodating groove 12120, the leakage of the electrolyte in the housing 11 from the opening of the second accommodating groove 12120 can be reduced. Moreover, since the cover plate 13 closes the opening of the second accommodating groove 12120 and is electrically connected to the post terminal 12, an indirect electrical connection between the post terminal 12 and a busbar component can be easily achieved by using the cover plate 13, and the increase in the connection area at the electrical connection is facilitated, thereby helping reduce the resistance at the electrical connection.

It is worth noting that the fitting manner and fitting position of the cover plate 13 and the post terminal 12 are not limited, as long as the cover plate 13 can close the opening of the second accommodating groove 12120. For example, in some embodiments, the cover plate 13 can be welded to the post terminal 12. During the processing, the conductive part 22 may first pass through the perforation 12130 and is welded to the wall of the second accommodating groove 12120, and then the cover plate 13 is welded to the post terminal 12 to close the opening of the second accommodating groove 12120.

It should be further noted that the specific structure of the cover plate 13 is not limited. For example, in some optional embodiments, referring to FIG. 22, the cover plate 13 includes a first conductive member 131 and a second conductive member 132 made of different materials, the first conductive member 131 is fitted with and electrically connected to the post terminal 12, and the second conductive member 132 is fitted with and electrically connected to the first conductive member 131.

In the above technical solution, by configuring the cover plate 13 in a composite form and configuring the first conductive member 131 to be made of the same material as that of the post terminal 12, the electrical connection between the first conductive member 131 and the post terminal 12 is facilitated. For example, the first conductive member 131 can be easy to be reliably and stably connected to the post terminal 12 by welding. Furthermore, since the second conductive member 132 is made of a different material from that of the first conductive member 131, the use of the second conductive member 132 to be electrically connected to a busbar component and the like made of a different material from that of the post terminal 12 is facilitated. For example, the second conductive member 132 can be easy to be reliably and stably connected to a busbar component made of the same material as that of the second conductive member 132 by welding.

For example, when the post terminal 12 is a negative electrode post terminal 12, the post terminal 12 is a copper post, and when the busbar component is an aluminum plate, the first conductive member 131 may be made of copper, and the second conductive member 132 may be made of aluminum. In this case, the post terminal 12 and the first conductive member 131 are made of the same material and can be effectively welded, and the second conductive member 132 and the busbar component are made of the same material and can be effectively welded, such that an indirect electrical connection between the post terminal 12 and the busbar component can be effectively achieved through the cover plate 13. Moreover, the welding of the post terminal 12 to the first conductive member 131 is welding between copper materials, which have good fluidity and are not prone to cracks, thereby helping improve the sealing effect of the welding position.

Referring to FIG. 22 again, in some optional examples, the first conductive member 131 is located between the second accommodating groove 12120 and the second conductive member 132. In the above technical solution, since the first conductive member 131 is located between the second accommodating groove 12120 and the second conductive member 132, the second accommodating groove 12120 and the second conductive member 132 can be separated. Therefore, when the electrolyte in the housing 11 enters the second accommodating groove 12120 through the perforation 12130, the first conductive member 131 can be used to reduce the contact of the part of the electrolyte with the second conductive member 132, so as to solve the problem of the corrosion of the second conductive member 132 by the electrolyte.

It is worth noting that the fitting manner of the first conductive member 131 and the second conductive member 132 is not limited. For example, in some embodiments, referring to FIG. 22, the first conductive member 131 is provided with a second groove 1311, the second conductive member 132 is embedded in the second groove 1311, and an opening of the second groove 1311 is formed on the surface of the first conductive member 131 on a side distal to the second accommodating groove 12120, such that the second conductive member 132 is exposed from the opening of the second groove 1311. Alternatively, in other embodiments, the connection manner between the first conductive member 131 and the second conductive member 132 may also be a fastening connection, a snap connection, or the like.

It should be further noted that the "exposure" of the second conductive member 132 from the opening of the second groove 1311 means that the first conductive member 131 does not block the second conductive member 132 at the opening position of the second groove 1311, and the second conductive member 132 is not required to protrude from the opening of the second groove 1311. For example, the second conductive member 132 may be flush with the surface of the first conductive member 131 on the side distal to the second accommodating groove 12120, or the second conductive member 132 may protrude from the surface of the first conductive member 131 on the side distal to the second accommodating groove 12120.

In the above technical solution, in one aspect, by embedding the second conductive member 132 in the first conductive member 131, the difficulty in assembling the first conductive member 131 and the second conductive member 132 can be reduced, the stability and convenience of the fit between the first conductive member 131 and the second conductive member 132 can be improved, the thickness of the cover plate 13 can be reduced, and the space occupied by the cover plate 13 can be reduced, thereby improving the space utilization rate of the battery cell 10. In another aspect, since the second conductive member 132 may be exposed from the surface of the first conductive member 131 on the side distal to the second accommodating groove 12120 through the opening of the second groove 1311, the realization of the electrical connection between the second conductive member 132 and the busbar component outside the post terminal 12 is facilitated.

In addition, since the opening of the second groove 1311 is formed on the surface of the first conductive member 131 on a side distal to the second accommodating groove 12120, which means that the second groove 1311 is open in a direction facing away from the active substance-coated part 21, the part of the first conductive member 131 configured to define the wall of the second groove 1311 is located between the second accommodating groove 12120 and the second conductive member 132, so as to separate the second accommodating groove 12120 from the second conductive member 132, thereby preventing the electrolyte entering the second groove 1311 from contacting the second conductive member 132 and reducing the leakage of the electrolyte.

Certainly, in other embodiments, the cover plate 13 may not be in a composite form composed of a plurality of materials. For example, in other embodiments of the present application, the cover plate 13 as a whole may also be configured in a non-composite form made of the same material to match the positive electrode post terminal 12, for example, which will not be described in detail herein.

Referring to FIG. 22 again, the cover plate 13 is also embedded in the opening of the second accommodating groove 12120. In the above technical solution, by embedding the cover plate 13 in the second accommodating groove 12120, the difficulty in assembling the cover plate 13 and the post terminal 12 can be reduced, the stability of assembly of the cover plate 13 and the post terminal 12 as well as the reliability and convenience of the connection can be improved, and the space occupied by the cover plate 13 outside the post terminal 12 can be reduced. Moreover, since the cover plate 13 is embedded in the opening of the second accommodating groove 12120, there is sufficient space in the second accommodating groove 12120 to accommodate the conductive part 22.

Certainly, in other embodiments of the present application, the fitting manner of the cover plate 13 and the post terminal 12 is not limited to being embedded in the second accommodating groove 12120. The cover plate 13 may also be directly arranged outside the post terminal 12 as a covering, that is, directly lidding the opening of the second accommodating groove 12120, as long as it is conducive to the fit with the busbar component of the battery 100, which is not limited in the embodiments.

According to some embodiments of the present application, the present application further provides a battery 100. The battery includes the battery cell 10 according to the above solutions.

In the technical solutions of the embodiments of the present application, by arranging the post terminal 12 on the mounting wall 114 of the housing body 111, the structural strength of the mounting wall 114 is increased by using the post terminal 12, such that the mounting wall 114 is not easily deformed, thereby enhancing the protective effect of the housing body 111 on the electrode assembly 2 and facilitating the control over the consistency of the burst pressure of the explosion-proof valve 6.

According to some embodiments of the present application, the present application further provides an electric device. The electric device includes the battery 100 according to the above solutions, and the battery 100 is configured to provide electric energy for the electric device. The electric device may be any one of the aforementioned devices or systems that use a battery.

According to some embodiments of the present application, provided is a housing body assembly 101. The housing body assembly 101 includes a housing body 111, an explosion-proof valve 6, and a post terminal 12. The housing body 111 is provided with an opening 1110 and includes a mounting wall 114. The mounting wall 114 is located on the wall body of the housing body 111 opposite the opening 1110. The mounting wall 114 is provided with a mounting hole 115 and a through hole 113 in a penetrating manner. The explosion-proof valve 6 is arranged at the mounting hole 115 and connected to the mounting wall 114. The post terminal 12 is arranged at the through hole 113 and connected to the mounting wall 114.

The outer peripheral wall of the post terminal 12 is provided with an annular groove 128 extending in the circumferential direction thereof, and the annular groove 128 is fitted with the hole edge of the through hole 113 to fix the post terminal 12 at the through hole 113, such that the post terminal 12 is not easily detached from the mounting wall 114. In addition, by arranging the annular groove 128 to be fitted with the hole edge of the through hole 113, the movement of the post terminal 12 can be limited, which helps reduce the possibility of collision between the post terminal 12 and the hole edge of the through hole 113, thereby enabling the post terminal 12 to be more stably electrically connected to the battery cell 10, and enabling the post terminal 12 to more stably output the electric energy inside the battery cell 10 to an external circuit. By stably fixing the post terminal 12 at the through hole 113 on the mounting wall 114, even if the pressure inside the battery cell 10 is high and one side of the post terminal 12 is subjected to the pressure, the post terminal 12 is not easily detached from the mounting wall 114, such that the post terminal 12 can stably enhance the structural strength of the mounting wall 114.

The depth of the mounting hole 115 extends in an up-down direction, and the mounting hole 115 sequentially includes a fourth hole segment 1154, a third hole segment 1153, a first hole segment 1151, and a second hole segment 1152 from top to bottom. The hole diameters of the fourth hole segment 1154, the third hole segment 1153, the first hole segment 1151, and the second hole segment 1152 sequentially decrease, and a third step surface 1163, a second step surface 1162, and a first step surface 1161 are sequentially defined. The explosion-proof valve 6 is supported on the first step surface 1161, the explosion-proof valve 6 is located on the first hole segment 1151, the protective sheet 14 is supported on the second step surface 1162, and the protective sheet 14 is located on the fourth hole segment 1154.

The second hole segment 1152 separates the first hole segment 1151 from the space inside the housing body 111. In this way, after the explosion-proof valve 6 is arranged on the first step surface 1161, the explosion-proof valve 6 is spaced apart from a component inside the housing body 111 by at least the first hole segment 1151, such that when the air pressure inside the battery cell 10 increases, gas can converge at the first hole segment 1151, and the gas can directly apply pressure to the explosion-proof valve 6 from the first hole segment 1151. When the air pressure in the battery cell 10 is higher than a critical value, the air pressure can damage the explosion-proof valve 6, thereby achieving pressure relief of the battery cell 10.

The third hole segment 1153 is configured to reserve space for the weld seam formed when the explosion-proof valve 6 is connected to the second hole edge by welding. When the explosion-proof valve 6 is connected to the mounting wall 114 by welding, the formed weld seam protrudes from the explosion-proof valve 6. The third hole segment 1153 can reserve space for the weld seam, such that when a component is arranged on the mounting wall 114, the possibility of scratching between the component and the weld seam can be reduced, so as to protect the component and the weld seam and enable the weld seam to stably connect the explosion-proof valve 6 and the mounting wall 114, thereby stably fixing the explosion-proof valve 6 on the mounting wall 114.

The through hole 113 and the mounting hole 115 are spaced apart from each other in the length direction of the mounting wall 114. The post terminal 12 and the explosion-proof valve 6 are spaced apart from each other in a reverse direction of the length of the mounting wall 114. Two through holes 113 and one mounting hole 115 are formed on the mounting wall 114. The mounting hole 115 is located between the two through holes 113. Two post terminals 12 are arranged in the through holes 113 in a one-to-one correspondence manner. That is, the two post terminals 12 are located on both sides of the explosion-proof valve 6. The two post terminals 12 may both be the positive electrode post terminals 1201 or the negative electrode post terminals 1202; alternatively, one of them may be the positive electrode post terminal 1201, and the other may be the negative electrode post terminal 1202.

The two post terminals 12 are located on both sides of the mounting hole 115, so as to enhance the structural strength of the region on the mounting wall 114 near the mounting hole 115 from the both sides of the mounting hole 115, thereby helping fully reduce the influence of the mounting hole 115 on the structural strength of the mounting wall 114, and enhancing the structural strength of the mounting wall 114.

The distance between the part of the hole edge of the through hole 113 and the part of the hole edge of the mounting hole 115 that are proximal to each other is 1-30 mm. Within this range, the mounting hole 115 and the through hole 113 are not in communication with each other, and a solid region of at least 1 mm is formed between the mounting hole 115 and the through hole 113 to reserve a pressing region for punching processing, thereby facilitating the processing on the mounting wall 114 to form the through hole 113 and the mounting hole 115.

By allowing the distance between the part of the hole edge of the through hole 113 and the part of the hole edge of the mounting hole 115 that are proximal to each other to be 1-30 mm, the mounting hole 115 is not far away from the through hole 113. By reducing the distance between the mounting hole 115 and the through hole 113, the post terminal 12 can enhance the structural strength of the region on the mounting wall 114 near the through hole 113 after the post terminal 12 is arranged at the through hole 113. In addition, since the through hole 113 is not far away from the mounting hole 115, the post terminal 12 can reduce the influence of the mounting hole 115 on the structural strength of the mounting wall 114 after the post terminal 12 is arranged on the mounting wall 114, thereby fully enhancing the overall structural strength of the mounting wall 114.

Finally, it should be noted that the above embodiments are only used to illustrate the technical solutions of the present application, rather than limit same. Although the present application has been described in detail with reference to the foregoing embodiments, those of ordinary skill in the art should understand that modifications can still be made to the technical solutions recorded in the foregoing embodiments, or equivalent substitutions to some or all of the technical features can be made. However, such modifications or substitutions do not make the spirit of the corresponding technical solutions deviate from the scope of the technical solutions in the embodiments of the present application, and shall all fall within the scope of claims and specification of the present application. In particular, the technical features mentioned in the embodiments can be combined in any manner, provided that there is no structural conflict. The present application is not limited to the specific embodiments disclosed herein, but includes all the technical solutions that fall within the scope of the claims.

## Claims

1. A housing body assembly of a battery cell, comprising:
a housing body, provided with an opening, wherein the housing body comprises a mounting wall provided with a mounting hole in a penetrating manner;
an explosion-proof valve, arranged at the mounting hole and connected to the mounting wall; and
a post terminal, arranged on the mounting wall and spaced apart from the mounting hole.

2. The housing body assembly of the battery cell according to claim 1, wherein the mounting wall is provided with a through hole in a penetrating manner, and the post terminal is arranged at the through hole and connected to the mounting wall.

3. The housing body assembly of the battery cell according to claim 2, wherein an outer peripheral wall of the post terminal is provided with an annular groove extending in a circumferential direction thereof, and the annular groove is fitted with a hole edge of the through hole.

4. The housing body assembly of the battery cell according to claim 2 or 3, wherein a minimum distance between the hole edge of the through hole and a hole edge of the mounting hole is 1-30 mm.

5. The housing body assembly of the battery cell according to any one of claims 1-4, wherein the mounting hole comprises a first hole segment and a second hole segment arranged in a thickness direction of the mounting wall and being in communication with each other, and the second hole segment is proximal to an inner cavity of the housing body relative to the first hole segment, wherein
a first step surface is formed between the first hole segment and the second hole segment, and the explosion-proof valve is arranged in the first hole segment and fitted with the first step surface.

6. The housing body assembly of the battery cell according to claim 5, wherein the mounting hole further comprises a third hole segment, the third hole segment is in communication with one end of the first hole segment distal to the second hole segment, a second step surface is formed between the first hole segment and the third hole segment, the explosion-proof valve is connected to the mounting wall by welding to form a weld seam, and the third hole segment is configured to accommodate the weld seam.

7. The housing body assembly of the battery cell according to claim 6, further comprising:
a protective sheet, wherein the protective sheet is arranged on a side of the explosion-proof valve facing away from the second hole segment and is configured to cover the explosion-proof valve.

8. The housing body assembly of the battery cell according to claim 7, wherein the mounting hole further comprises a fourth hole segment, the fourth hole segment is in communication with one end of the third hole segment distal to the first hole segment, a third step surface is formed between the fourth hole segment and the third hole segment, and the protective sheet is arranged in the fourth hole segment and fitted with the third step surface.

9. The housing body assembly of the battery cell according to claim 7, wherein an exhaust groove is arranged on a side of the mounting wall facing away from the inner cavity of the housing body, the exhaust groove is in communication with the mounting hole, and the protective sheet covers a part of the exhaust groove.

10. The housing body assembly of the battery cell according to claim 9, wherein a cross-section of the exhaust groove has a square, trapezoidal, or triangular shape.

11. The housing body assembly of the battery cell according to any one of claims 1-10, wherein the explosion-proof valve is of an integrally formed part, and the explosion-proof valve is provided with a thickness reduced part; or the explosion-proof valve is of a split-type structure.

12. The housing body assembly of the battery cell according to any one of claims 1-11, wherein one post terminal is arranged on the mounting wall, and the post terminal and the explosion-proof valve are spaced apart from each other in a length direction of the mounting wall.

13. The housing body assembly of the battery cell according to any one of claims 1-11, wherein at least two are arranged on the mounting wall, the at least two post terminals are spaced apart from each other in a length direction of the mounting wall, and the explosion-proof valve is located between the two post terminals.

14. The housing body assembly of the battery cell according to any one of claims 1-13, wherein the mounting wall is located on a wall body of the housing body opposite the opening.

15. A battery cell, comprising:
a housing body assembly, wherein the housing body assembly is the housing body assembly of the battery cell according to any one of claims 1-14;
an electrode assembly, wherein the electrode assembly is arranged in the housing body and comprises an active substance-coated part and a conductive part connected to the active substance-coated part, and the conductive part is electrically connected to the post terminal; and
a housing cover, wherein the housing cover lids the opening to encapsulate the electrode assembly in the housing body.

16. The battery cell according to claim 15, wherein the mounting wall is located on the wall body of the housing body opposite the opening, an accommodating part is formed on the post terminal, and at least a part of the conductive part extends into the accommodating part.

17. The battery cell according to claim 16, wherein the accommodating part comprises a first accommodating groove, a surface of the post terminal on a side facing the active substance-coated part is a post terminal inner end surface, an opening of the first accommodating groove is formed on the post terminal inner end surface, and at least a part of the conductive part is accommodated in the first accommodating groove.

18. The battery cell according to claim 16, wherein the accommodating part comprises a second accommodating groove, a surface of the post terminal on a side distal to the active substance-coated part is a post terminal outer end surface, an opening of the second accommodating groove is formed on the post terminal outer end surface, the second accommodating groove is in communication with an inner cavity of the housing body through a perforation, the conductive part is provided in the perforation in a penetrating manner, and at least a part of the conductive part is accommodated in the second accommodating groove.

19. A battery, comprising the battery cell according to any one of claims 15-18.

20. An electric device, comprising the battery according to claim 19.
